# EUROPEAN PATENT APPLICATION

(11) **EP 4 470 440 A1**
(43) Date of publication of application: **04.12.2024**
(21) Application number: 22913370.7
(22) Date of filing: 02.08.2022
(51) Int. Cl.: A47L 11/40

(54) **SELF-CLEANING MAINTENANCE STATION AND SELF-CLEANING SYSTEM**

(30) Priority: 31.12.2021 CN 202111676005
(71) Applicant: Beijing Roborock Technology Co., Ltd., Beijing 102206 (CN)
(72) Inventor: LI, Xing, Beijing 102206 (CN); YANG, Zhimin, Beijing 102206 (CN); LIN, Xiang, Beijing 102206 (CN)
(74) Representative: Cabinet Beau de Loménie
(86) International application number: PCT/CN2022/109795
(87) International publication number: WO 2023/124084

(57) **Abstract**

A self-cleaning maintenance station and a self-cleaning system. The self-cleaning maintenance station comprises a self-cleaning maintenance station body (2000) and a water storage tank, wherein the water storage tank is assembled at the top end of the self-cleaning maintenance station body (2000). The self-cleaning maintenance station body (2000) comprises a water storage chamber (2700), wherein an opening of the water storage chamber is provided upwards and frontwards at the top of the self-cleaning maintenance station body (2000); and the water storage chamber is configured to accommodate the water storage tank. The water storage tank is detachably assembled at the top end of the self-cleaning maintenance station body (2000), and comprises a waste water port or a purified water port, which is higher than the highest water level of the water storage tank. A water port of the water storage tank is provided in an upper portion of the water storage tank, such that a liquid in the water storage tank is not prone to overflowing, thereby avoiding damage to electronic elements caused by overflowing liquid.

## Description

### CROSS-REFERENCE TO RELATED APPLICATIONS

This application is based on and claims the priority to the Chinese Patent Application No. 202111676005.2, filed on December 31, 2021, the entire contents of which are incorporated into the present application as a reference.

### TECHNICAL FIELD

The present disclosure relates to the technical field of cleaning robots, and specifically to a self-cleaning maintenance station and a self-cleaning system.

### BACKGROUND ART

In recent years, with the development of science and technology, various cleaning supplies have emerged in an endless stream. These cleaning supplies reduce cleaning and sweeping burdens on people, meet people's needs and bring great convenience to people's lives. Among these cleaning supplies, automatic cleaning devices are favored because of their high intelligence.

An automatic cleaning device capable of sweeping and mopping the floor can sweep a to-be-cleaned position, suck dust and debris at the position, and perform wet wipe. After a cleaning operation is completed by the automatic cleaning device, a user may manually dispose of garbage in a dust box of the automatic cleaning device. For a position having a lot of dust and debris that are difficult to clear, because the space in the dust box of the automatic cleaning device is finite, it may be required to manually clear the dust box at a high frequency in a cleaning process, which greatly reduces cleaning efficiency. Moreover, frequent clearing of the dust box leads to poor user experience.

### SUMMARY OF THE INVENTION

The present disclosure aims to provide a self-cleaning maintenance station, which can solve a problem of liquid in a water storage tank overflowing easily.

An embodiment of the present disclosure provides a self-cleaning maintenance station, including a self-cleaning maintenance station body and a water storage tank, where the water storage tank is assembled at a top end of the self-cleaning maintenance station body;
the self-cleaning maintenance station body includes a water storage chamber, where the water storage chamber is disposed at a top portion of the self-cleaning maintenance station body with an opening of the water storage chamber facing upward and forward, and is configured to accommodate the water storage tank; and
the water storage tank is detachably assembled at the top end of the self-cleaning maintenance station body, and includes a waste water opening or a clean water opening; and a height of the waste water opening or the clean water opening is higher than a highest water level line of the water storage tank.

An embodiment of the present disclosure further provides a self-cleaning system, including an automatic cleaning device and the self-cleaning maintenance station as described in any of the above.

### BRIEF DESCRIPTION OF THE DRAWINGS

The accompanying drawings here, which are incorporated into the Description and constitute a part of the Description, show embodiments conforming to the present disclosure, and are used to explain the principles of the present disclosure together with the Description. Apparently, the accompanying drawings in the following description show merely some embodiments of the present disclosure, and those of ordinary skill in the art can also derive other accompanying drawings from these accompanying drawings without creative efforts. In the accompanying drawings:
FIG. 1 is a schematic diagram of an overall structure of a self-cleaning maintenance station according to some embodiments of the present disclosure;
FIG. 2 is a schematic structural diagram of a self-cleaning maintenance station body according to some embodiments of the present disclosure;
FIG. 3 is a schematic structural diagram of a water storage tank in a self-cleaning maintenance station according to some embodiments of the present disclosure;
FIG. 4 is a side view of a water storage tank in a self-cleaning maintenance station according to some embodiments of the present disclosure;
FIG. 5 is a schematic diagram of an inner structure of a water storage tank in a self-cleaning maintenance station according to some embodiments of the present disclosure;
FIG. 6 is a structural sectional view of a dust collection bin according to some embodiments of the present disclosure;
FIG. 7 is a top surface assembling structural diagram of a fan in a dust collection bin according to some embodiments of the present disclosure;
FIG. 8 is a structural diagram of a shock-absorbing hood of a dust collection bin according to some embodiments of the present disclosure;
FIG. 9 is a bottom surface assembling structural diagram of a fan in a dust collection bin according to some embodiments of the present disclosure;
FIG. 10 is a structural diagram of a shock-absorbing cushion of a dust collection bin according to some embodiments of the present disclosure;
FIG. 11 is a front view of a bottom plate of a self-cleaning maintenance station according to some embodiments of the present disclosure;
FIG. 12 is a side view of a bottom plate of a self-cleaning maintenance station according to some embodiments of the present disclosure;
FIG. 13 is a three-dimensional structural diagram of a bottom plate of a self-cleaning maintenance station according to some embodiments of the present disclosure;
FIG. 14 is a diagram of an overall structure of a self-cleaning maintenance station and a dust box according to some embodiments of the present disclosure;
FIG. 15 is a sectional view of a wind duct of a self-cleaning maintenance station according to some embodiments of the present disclosure; and
FIG. 16 is a schematic diagram of an airflow direction in a self-cleaning maintenance station in a dust collection state according to some embodiments of the present disclosure.

### Description of Reference Numerals:

bottom plate 1000 of self-cleaning maintenance station, self-cleaning maintenance station body 2000, water storage chamber 2700, dust collection chamber 2100, dust collection bin 3000, waste water chamber 2300, clean water chamber 2400, boss 2600, air pump opening 2610, waste water tank connection opening 2620, clean water tank connection opening 2630, dust collection hood 2800, clean water tank 4000, waste water tank 5000, wind duct 2500, drain hole 2101, wind duct 2500, wind inlet 2102, drain valve 2103, fixed end 21031, elastic movable end 21032, water blocking structure 2104, first blocking wall 21041, second blocking wall 21042, fan compartment 2200, fan channel 2210, fan 2220, shock-absorbing device 2230, air inlet 2240, exhaust vent 2250, shock-absorbing hood 2231, top surface 22311 of shock-absorbing hood, first opening 22312, protruding edge 22313, first protrusion 22314, second protrusion 22315, third protrusion 22316, groove 22317, side wall 22318 of shock-absorbing hood, first protruding beam 22319, shock-absorbing cushion 2232, second opening 22322, second protruding beam 22321, third protruding beam 22323, assembling protrusion 22324, bottom plate body 1100, recessed portion 1121, raised portion 1122, anti-skid structure 1123, lifting structure 1300, wedged-shape component 1310, first inclined surface 1311, first top surface 1313, second inclined surface 1312, roller 1320, beveled body 1400, self-cleaning maintenance station body 2000, dust collection hood 2800, dust collection bin 3000, clean water tank 4000, waste water tank 5000, body base 6000, dust collection opening 6100, washing bin 6200, body wind duct 2510, base wind duct 2520, water storage chamber 2700, dust collection hood 2800, dust collection bin 3000, clean water tank 4000, waste water tank 5000, body base 6000, dust collection opening 6100, washing bin 6200, dust box 300, dust inlet 310, and wind intake 320.

### DETAILED DESCRIPTION

To make the objectives, technical solutions, and advantages of the present disclosure clearer, the present disclosure will be further described in detail below with reference to the accompanying drawings. It is obvious that the described embodiments are only some, but not all of the embodiments of the present disclosure. All other embodiments acquired by those of ordinary skill in the art without creative efforts based on the embodiments in the present disclosure are within the scope of protection of the present disclosure.

The terms used in the embodiments of the present disclosure are for the purpose of describing particular embodiments only, and are not intended to limit the present disclosure. The singular forms "a/an", "said" and "the" used in the embodiments of the present disclosure and the appended claims are intended to include plural forms as well, unless otherwise clearly indicated in the context. The term "a plurality of" generally means at least two.

It should be understood that the term "and/or" used herein only describes an association relationship between associated objects, and indicates that there may be three kinds of relationships. For example, A and/or B may indicate that A exists alone, both A and B exist, and B exists alone. In addition, the character "/" in this article generally indicates an "or" relationship between the contextual objects.

It should be understood that, although the terms first, second, third, and the like may be used for descriptions in the embodiments of the present disclosure, these descriptions should not be limited to these terms. These terms are only used for a distinguishing purpose. For example, without departing from the scope of the embodiments of the present disclosure, "first" may also be referred to as "second", and similarly, "second" may also be referred to as "first".

It should be further noted that the terms "include," "contain," or any other variants thereof are intended to cover the nonexclusive inclusion, such that a commodity or device including a series of elements includes not only these elements, but also other elements not listed explicitly or elements inherent to such a commodity or device. Without more limitations, the element defined by the phrase "including a ..." does not exclude the existence of other same elements in the commodity or device including that element.

Optional embodiments of the present disclosure are described in detail below with reference to the accompanying drawings.

Generally, a structure of a self-cleaning maintenance station in the related art is relatively complex. A water tank is disposed in a complex cover cap of the self-cleaning maintenance station, leading to inconvenience in removal, placement and use; and a connection opening of the water tank is formed at the bottom portion of the water tank. As a result, water in the water tank is prone to overflow, which may very possibly damage a device in the self-cleaning maintenance station. In addition, a wind duct of the self-cleaning maintenance station is too complex, which is not convenient for debris to enter a dust collection bin from a dust box.

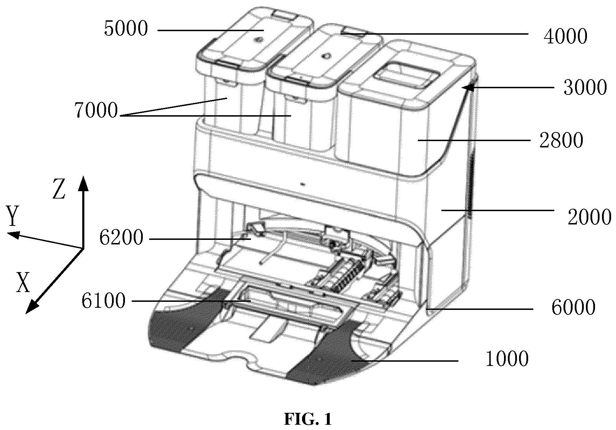

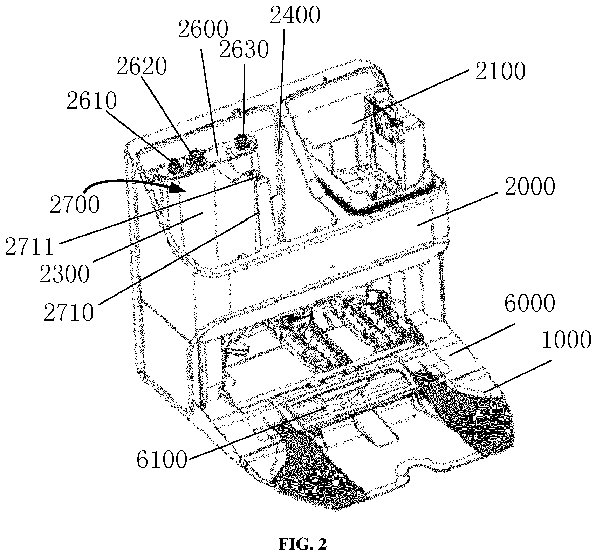

In view of this, an embodiment of the present disclosure provides a self-cleaning maintenance station, in which a water tank and a dust collection hood are exposed outside a self-cleaning maintenance station body, so as to facilitate the mounting and use by a user. Moreover, a water opening is provided at the top portion of the self-cleaning maintenance station body, such that it is hard for water to overflow from the water tank. A wind duct is directly disposed on a side wall of the self-cleaning maintenance station body, such that a path of the wind duct is reduced, improving dust collection efficiency. Specifically, the embodiment of the present disclosure provides a self-cleaning maintenance station, as an example, FIG. 1 exemplarily shows a schematic diagram of an overall structure of a self-cleaning maintenance station, FIG. 2 exemplarily shows a schematic structural diagram of a self-cleaning maintenance station body with a waste water tank, a clean water tank, and a dust collection hood removed.

For a clearer description of the behaviors of the self-cleaning maintenance station, directions are defined as follows: the self-cleaning maintenance station can be calibrated by the following three mutually perpendicular axes as defined: a transversal axis Y, a front and rear axis X, and a central vertical axis Z. A direction opposite an arrow direction of the front and rear axis X, namely, a direction in which an automatic cleaning device enters the self-cleaning maintenance station, is marked as "rearward direction". A direction along the arrow direction of the front and rear axis X, namely, a direction in which an automatic cleaning device leaves the self-cleaning maintenance station, is marked as "forward direction". The transversal axis Y is substantially in a width direction of the self-cleaning maintenance station body. The vertical axis Z is a direction extending upward from the bottom surface of the self-cleaning maintenance station.

As shown in FIG. 1, a direction in which a bottom plate of the self-cleaning maintenance station protrudes from the self-cleaning maintenance station body is the forward direction; and a direction facing a rear wall of the self-cleaning maintenance station body is the rearward direction. A dust collection bin 3000 is located on the left side of the self-cleaning maintenance station; a clean water tank 4000 is located on the right side of the dust collection bin 3000; and a waste water tank 5000 is located on the right side of the clean water tank 4000.

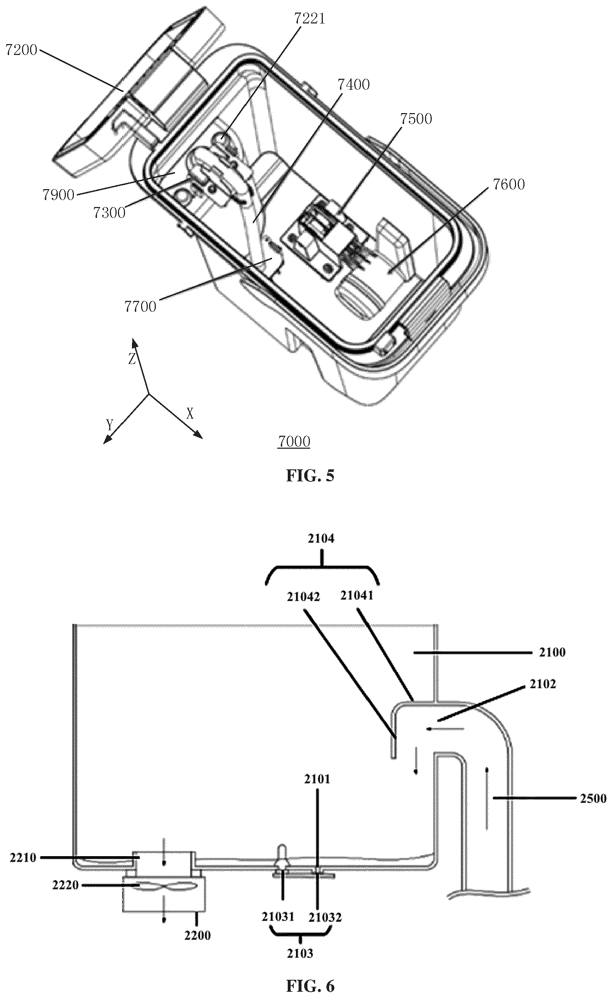

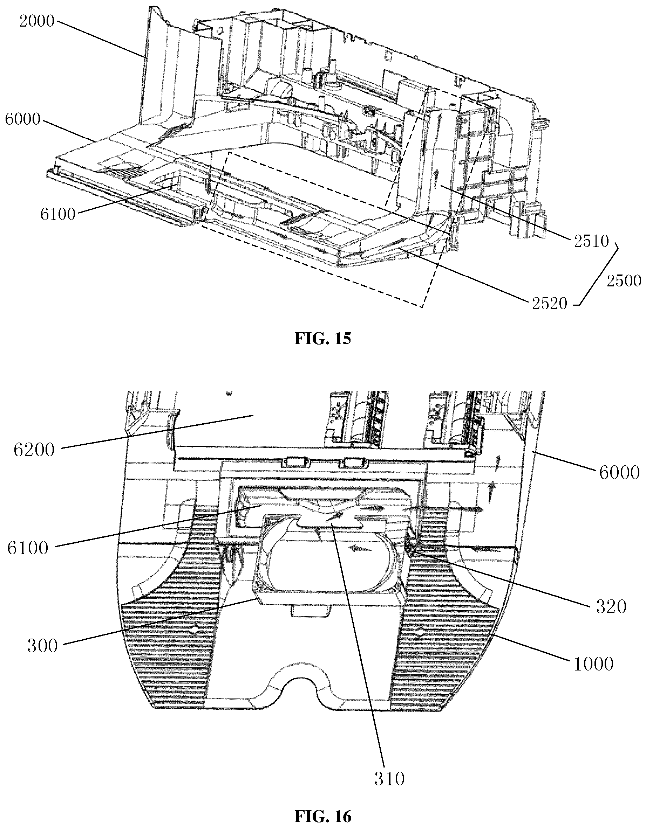

As shown in FIG. 1, the self-cleaning maintenance station provided in the present embodiment includes the bottom plate 1000 of the self-cleaning maintenance station, the self-cleaning maintenance station body 2000, as well as a dust collection hood 2800, the clean water tank 4000 and the waste water tank 5000 that are disposed side by side on the self-cleaning maintenance station body 2000, where the bottom plate 1000 of the self-cleaning maintenance station is detachably or non-detachably connected to the self-cleaning maintenance station body 2000, facilitating transportation and maintenance of the bottom plate 1000 of the self-cleaning maintenance station and the self-cleaning maintenance station body 2000. As shown in FIG. 2, the self-cleaning maintenance station body 2000 includes a water storage chamber 2700, a dust collection chamber 2100 and a wind duct (for example, the wind duct 2500 shown in FIG. 6 and FIG. 15). The water storage chamber 2700 is disposed at the top portion of the self-cleaning maintenance station body 2000 with an opening of the water storage chamber 2700 facing upward and forward, and includes a clean water chamber 2400 for accommodating the clean water tank 4000 and a waste water chamber 2300 for accommodating the waste water tank 5000. The dust collection chamber 2100 is disposed side by side with the water storage chamber 2700 at the top end of the self-cleaning maintenance station body 2000 with an opening of the dust collection chamber 2100 facing upward and forward. The dust collection chamber 2100 forms the dust collection bin 3000 for accommodating a dust collection hood 2800. The upward and forward design of both the water storage chamber 2700 and the dust collection chamber 2100 facilitates the mounting and removal of the waste water tank 5000, the clean water tank 4000 and the dust collection hood 2800, and all of the waste water tank 5000, the clean water tank 4000 and the dust collection hood 2800 are assembled to the self-cleaning maintenance station body 2000 from a front side and an upper side. Such a structural design conforms to user's using habits. In addition, the upward and forward design facilitates daily maintenance of components in the water storage chamber 2700 and the dust collection hood 2100.

The self-cleaning maintenance station body 2000 further includes a wind duct and a body base 6000. The wind duct is at least partially disposed on a side wall of the self-cleaning maintenance station body 2000. The body base 6000 at the bottom portion of the self-cleaning maintenance station body 2000 is communicated with the dust collection chamber 2100 through the wind duct. In a dust collection process, garbage in the dust box enters the wind duct through a dust collection opening of the body base 6000, and then enters the dust collection chamber 2100 through the wind duct. The self-cleaning maintenance station body 2000 is configured to collect garbage in the dust box of the automatic cleaning device. The body base 6000 of the self-cleaning maintenance station includes a dust collection opening 6100. The dust collection opening 6100 is configured to be docked with a dust outlet of the automatic cleaning device. The garbage in the dust box of the automatic cleaning device enters the dust collection bin 3000 of the self-cleaning maintenance station body 2000 through the dust collection opening 6100. A sealing rubber gasket is also disposed around the dust collection opening 6100, and is used for sealing after the dust collection opening 6100 is docked with the dust outlet of the automatic cleaning device, thereby preventing leakage of the garbage while ensuring a dust collection effect.

As shown in FIG. 2, the water storage chamber 2700 and the dust collection chamber 2100 are formed by the rear wall, the front wall and a plurality of side walls of the self-cleaning maintenance station body 2000 in a surrounding manner. A rear wall and a front wall of the water storage chamber 2700 are coplanar with those of the dust collection chamber 2100 respectively, and one side wall of the water storage chamber 2700 is coplanar with that of the dust collection chamber 2100. In some embodiments, the height of the rear wall of the self-cleaning maintenance station body 2000 is higher than the height of the front wall of the self-cleaning maintenance station body 2000; the side walls of the self-cleaning maintenance station body 2000 are connected to the rear wall and the front wall; and an end surface of the side wall of the self-cleaning maintenance station body 2000 has an arc-shaped structure. The upward and forward design of both the water storage chamber 2700 and the dust collection chamber 2100 facilitates the mounting and demounting of the waste water tank 5000, the clean water tank 4000 and the dust collection hood 2800. The arc-shaped structure ensures stability and aesthetics of the waste water tank 5000 and the clean water tank 4000 that are mounted in the water storage chamber 2700, and of the dust collection hood 2800 mounted in the dust collection chamber 2100.

The water storage chamber 2700 is configured to accommodate a water storage tank (including the waste water tank 5000 and the clean water tank 4000). A boss 2600 attached to the rear wall of the water storage chamber 2700 and extending upward from the bottom portion of the water storage chamber 2700 to a position slightly lower than a height of the rear wall of the water storage chamber is included in the water storage chamber 2700. An upper portion of the boss is provided with a plurality of protruding openings. A material of the protruding openings may include but is not limited to a soft-rubber material. The protruding opening is configured to be connected to the waste water tank 5000 or the clean water tank 4000 assembled at a corresponding position. In some embodiments, a vertically extending partition plate 2710 is included in the water storage chamber 2700, and divides the water storage chamber 2700 into two parts. One part is the waste water chamber 2300 used for accommodating the waste water tank 5000; and the other part is the clean water chamber 2400 used for accommodating the clean water tank 4000. It should be noted that the upper portion of the boss may be the top portion of the boss, or may be a side wall of the boss that is higher than the highest water level lines of the clean water tank and the waste water tank in an assembled state, which is not limited herein.

In the prior art, a water outlet or water inlet of a water tank is usually disposed at a bottom portion of the water tank. When the water tank is lifted, a switch of the water outlet is pressed tightly downward under the action of gravity of water, such that an effect of preventing water leakage can be achieved. However, in general, if the switch is stuck, or if there is not much water in the water tank, the switch is incapable of achieving a sealing effect. As a result, some of water is spilled out through the water outlet or water inlet in a process of lifting the water tank, causing damage to an external component docked to the water tank. In some embodiments, the protruding openings include an air pump opening 2610 and a waste water tank connection opening 2620 that are disposed at the top end of the boss 2600 correspondingly to the assembling position of the waste water tank 5000. An air pump pumps air from the waste water tank 5000 through the air pump opening 2610; and the waste water tank 5000 has a sealed structure. Therefore, a negative pressure is formed inside the waste water tank in the pumping process, and waste water in a washing bin is pumped into the waste water tank 5000 through a waste water pipe and the waste water tank connection opening 2620. A clean water tank connection opening 2630 is disposed at the top end of the boss 2600 correspondingly to the assembling position of the clean water tank 4000. Under the action of a peristaltic pump, clean water in the clean water tank 4000 flows onto a scraper in the washing bin through the clean water tank connection opening 2630, so as to wash a cleaning head of the automatic cleaning device. The air pump opening 2610, the waste water tank connection opening 2620 and the clean water tank connection opening 2630 are disposed at the top end of the boss 2600, such that in a replacement process of the clean water tank or the waste water tank, water in the clean water tank or the waste water tank can be prevented from overflowing from the tank and flowing into the clean water chamber or the waste water chamber. Because the air pump opening 2610, the waste water tank connection opening 2620 and the clean water tank connection opening 2630 are in sealed connection with top ends of the waste water tank 5000 and the clean water tank 4000, compared with the connection at the bottom end of the clean water chamber or the waste water chamber, an operation is more convenient.

The self-cleaning maintenance station further includes the waste water tank 5000 and the clean water tank 4000 that are disposed in the water storage chamber side by side, as well as the dust collection hood 2800 disposed in the dust collection chamber 2100 and keeping abreast with the waste water tank and the clean water tank. The top surfaces of the waste water tank 5000, the clean water tank 4000 and the dust collection hood 2800 are flush to each other approximately, and front surfaces thereof are flush to each other approximately, too. After the waste water tank 5000, the clean water tank 4000 and the dust collection hood 2800 are assembled onto the self-cleaning maintenance station body 2000, a neatly arranged structure is formed, which not only facilitates mounting, demounting and usage, but also provides the aesthetic neat appearance and enhances the user experience.

After the self-cleaning maintenance station is used for a long time, the protruding openings are inevitably contaminated by waste water resulting from washing of a cleaning component, with stains remained. Due to the foregoing arrangement, the protruding openings on the boss 2600 have open structures relative to the front wall, and even have open structures relative to the side walls, such that an arm or a cleaning tool can be in contact with the protruding openings from all angles, facilitating a user to clear the dirt accumulated near the protruding openings.

When the waste water tank 5000 and the clean water tank 4000 are assembled in the water storage chamber, the top surfaces of the waste water tank 5000 and the clean water tank 4000 are higher than the rear wall of the self-cleaning maintenance station body 2000, and most of tank bodies of the waste water tank 5000 and the clean water tank 4000 are disposed outside the water storage chamber. When the dust collection hood 2800 is assembled in the dust collection chamber 2100, the top surface of the dust collection hood 2800 is higher than the rear wall of the self-cleaning maintenance station body 2000, and most of the dust collection hood 2800 is disposed outside the dust collection chamber 2100. Due to the foregoing design, a usage amount of a material of the self-cleaning maintenance station body is reduced; the upper portions of the waste water tank, the clean water tank and the dust collection hood are exposed outside the chambers, such that a user can conveniently operate the waste water tank, the clean water tank and the dust collection chamber by lifting handles disposed at the top portions of the waste water tank, the clean water tank and the dust collection hood, and which also achieves the technical effect of aesthetic design. Moreover, the top portion of the self-cleaning maintenance station body is designed with the lower front wall and the higher rear wall, and the upper front portions of the waste water tank, the clean water tank and the dust collection hood are exposed outside the chambers, such that a user can observe water levels in the transparent waste water tank and clean water tank and a condition in the dust collection chamber conveniently, and perform the corresponding operations on the waste water tank, the clean water tank and the dust collection chamber in time.

The dust collection hood 2800 includes an opening in sealed connection with the end surface of the dust collection chamber 2100. The opening is in sealed connection with the end surface of the dust collection chamber 2100. Due to the sealed connection, an interior of the dust collection bin is sealed completely, improving the dust collection efficiency.

A washing chamber with an opening facing forward is defined by a lower portion of the self-cleaning maintenance station body 2000 and the body base 6000, and is configured to accommodate the automatic cleaning device when the automatic cleaning device returns to the self-cleaning maintenance station for a maintenance operation. A washing bin 6200 is arranged on the body base 6000 of the self-cleaning maintenance station body, and is configured to clean a cleaning component on the automatic cleaning device after the automatic cleaning device is matched with the washing chamber.

When the automatic cleaning device, for example, a sweeping robot, returns to the self-cleaning maintenance station after completing the sweeping operation, the automatic cleaning device may move to the body base 6000 along an inclined surface of the bottom plate 1000 of the self-cleaning maintenance station, such that the dust outlet of the automatic cleaning device is docked with the dust collection opening 6100 on the body base 6000, so as to transfer garbage in the dust box of the automatic cleaning device into the dust collection bin 3000 of the self-cleaning maintenance station body 2000.

In some embodiments, the body base 6000 and the body 2000 form undetachable integral part. The body base 6000 further includes a dust collection wind path. The dust collection wind path is disposed in the body base 6000, and is configured to recover garbage in the automatic cleaning device. A wind inlet of the dust collection wind path is the dust collection opening. A wind outlet of the dust collection wind path is communicated with the dust collection chamber 2100 through the wind duct 2500.

By arranging the dust collection chamber for accommodating the dust collection hood and the water storage chamber for accommodating the water storage tank side by side at the top end of the self-cleaning maintenance station body, the space of the dust collection seat in the height direction is saved, and the body of the dust collection seat is not too high and may not become instable in the center of gravity while a large enough volume is ensured for the dust collection chamber and the water storage chamber. By covering the dust collection chamber with the dust collection hood, the dust collection hood is more closely attached to the chamber under the suction force from the fan during the process of dust collection, which further improves the sealing effect. By exposing the water storage tank and the dust collection hood outside the water storage chamber and the dust collection chamber, it is convenient for a user to visually check the internal conditions of the tank and the hood by means of the exposed parts, providing improved user experience. In addition, compared with the design method of placing both the water storage tank in the water storage chamber and the dust collection hood in the dust collection chamber, this exposed design relieves the user, in need of taking out and placing the water storage tank and the dust collection hood, from first lifting the water storage tank and the dust collection hood to the highest position beyond the chambers and then translating and taking them out, which reduces the lifting stroke for the user and allows the user to take out the water storage tank and the dust collection hood from the chambers more easily.

Generally, the structure of a self-cleaning maintenance station in the related art is relatively complex. A water tank is disposed in a complex cover cap of the self-cleaning maintenance station, leading to inconvenience in removal, placement and use. A connection opening of the water tank is formed at the bottom portion of the water tank. As a result, water in the water tank is prone to overflow, which may very possibly damage a component in the self-cleaning maintenance station.

In view of this, an embodiment of the present disclosure provides a self-cleaning maintenance station. A water tank is at least partially exposed outside a the self-cleaning maintenance station body, such that a user can mount and demount the water tank conveniently. A water opening of the water tank is provided at an upper portion of the water tank, such that it is hard for liquid in the water tank to overflow, avoiding a phenomenon that overflowed liquid damages an electronic element. The same structure has the same technical effects, and some of the technical effects are not repeated herein.

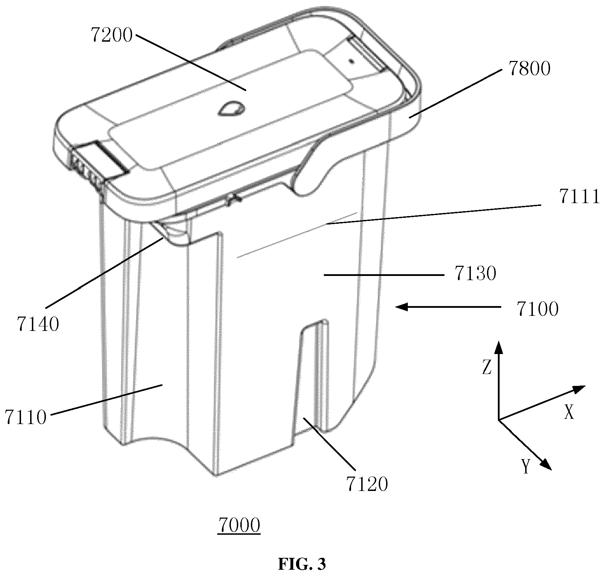

Specifically, the embodiment of the present disclosure provides a self-cleaning maintenance station, as an example, FIG. 1 exemplarily shows a schematic diagram of an overall structure of a self-cleaning maintenance station, FIG. 2 exemplarily shows a schematic structural diagram of a self-cleaning maintenance station body with a waste water tank, a clean water tank and a dust collection hood removed, FIG. 3 to FIG. 5 are schematic diagrams that show a water storage tank involved in a self-cleaning maintenance station of the present disclosure from different viewing angles.

As shown in FIG. 1, the self-cleaning maintenance station provided in this embodiment includes the bottom plate 1000 of the self-cleaning maintenance station, the self-cleaning maintenance station body 2000 and a water storage tank 7000. In some embodiments, the bottom plate 1000 of the self-cleaning maintenance station is detachably or non-detachably connected to the self-cleaning maintenance station body 2000, facilitating transportation and maintenance of the bottom plate 1000 of the self-cleaning maintenance station and the self-cleaning maintenance station body 2000. The water storage tank 7000 is assembled at the top end of the self-cleaning maintenance station body 2000.

As shown in FIG. 2, the self-cleaning maintenance station body 2000 includes a water storage chamber 2700. The water storage chamber 2700 is disposed at the top portion of the self-cleaning maintenance station body 2000 with an opening of the water storage chamber 2700 facing upward and forward. The water storage chamber 2700 is configured to accommodate the water storage tank 7000. The water storage tank 7000 may be a clean water tank 4000 or a waste water tank 5000. There may be a plurality of water storage tanks 7000. In some embodiments, the self-cleaning maintenance station body 2000 includes two water storage tanks 7000, namely, the clean water tank 4000 and the waste water tank 5000. Correspondingly, the water storage chamber 2700 includes a clean water chamber 2400 for accommodating the clean water tank 4000, and a waste water chamber 2300 for accommodating the waste water tank 5000. Due to the upward and forward design of the water storage chamber 2700, the water storage tank 7000 can be assembled onto the self-cleaning maintenance station body 2000 from the front side and the upper side. Such an assembling manner better conforms to the user's using habits, facilitating mounting and demounting of the water storage tank 7000. In addition, the upward and forward design facilitates daily maintenance of a component in the water storage chamber 2700.

The water storage chamber 2700 is formed by the rear wall, the front wall and a plurality of side walls of the self-cleaning maintenance station body 2000 in a surrounding manner. In some embodiments, the height of the rear wall of the self-cleaning maintenance station body 2000 is higher than the height of the front wall of the self-cleaning maintenance station body 2000. The side walls of the self-cleaning maintenance station body 2000 are connected to the rear wall and the front wall. The end surface of the side wall of the self-cleaning maintenance station body 2000 has an arc-shaped structure. The arc-shaped structure ensures stability and aesthetics of the water storage tank 7000 mounted in the water storage chamber 2700.

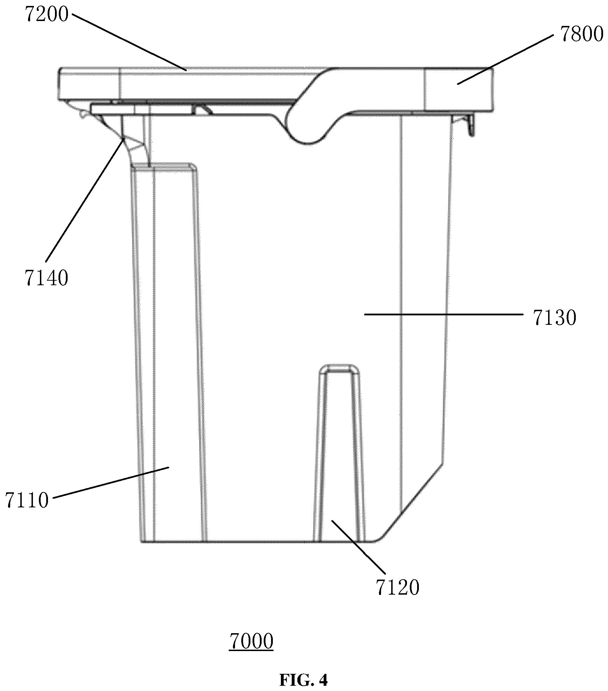

A boss 2600 attached to the rear wall of the water storage chamber 2700 and extending upward from the bottom portion of the water storage chamber 2700 to a position slightly lower than a height of the rear wall of the water storage chamber is further included in the water storage chamber 2700. The height of the boss 2600 is higher than a height of the highest water level line of the water storage tank 7000. When the water storage tank 7000 is assembled in the water storage chamber 2700, the boss 2600 receives a water tank projecting part (for example, a water tank projecting part 7140 shown in FIG. 3 or FIG. 4) of the water storage tank 7000.

A plurality of protruding openings are provided at the top portion of the boss 2600. The protruding openings are configured to be connected to the water storage tank 7000 assembled at the corresponding position. Specifically, the protruding opening is configured to be connected to a waste water opening or a clean water opening provided on the water storage tank 7000.

In some embodiments, the protruding openings include an air pump opening 2610 and a waste water tank connection opening 2620 that are disposed at the top end of the boss 2600 correspondingly to the assembling position of the waste water tank 5000. An air pump pumps air from the waste water tank 5000 through the air pump opening 2610; and the waste water tank 5000 has a sealed structure. Therefore, a negative pressure is formed inside the waste water tank in an air pumping process, and waste water in a washing bin is pumped into the waste water tank 5000 through a waste water pipe and the waste water tank connection opening 2620.

In some embodiments, the protruding openings include a clean water tank connection opening 2630 disposed at the top end of the boss 2600 correspondingly to the assembling position of the clean water tank 4000. Under the action of a peristaltic pump, clean water in the clean water tank 4000 flows onto a scraper in the washing bin through the clean water tank connection opening 2630, so as to wash a cleaning head of the automatic cleaning device.

The air pump opening 2610, the waste water tank connection opening 2620 and the clean water tank connection opening 2630 are disposed at the top end of the boss 2600, such that in a replacement process of the clean water tank or the waste water tank, water in the clean water tank or the waste water tank can be prevented from overflowing from the tank and flowing into the clean water chamber or the waste water chamber. Because the air pump opening 2610, the waste water tank connection opening 2620 and the clean water tank connection opening 2630 are in sealed connection with top ends of the waste water tank 5000 and the clean water tank 4000, compared with a connection at the bottom end of the clean water chamber or the waste water chamber, an operation is more convenient.

After the self-cleaning maintenance station is used for a long time, the protruding openings are inevitably contaminated by waste water resulting from washing of a cleaning component, with stains remained. Due to the foregoing arrangement, the protruding openings on the boss 2600 have open structures relative to the front wall, and even have open structures relative to the side walls, such that an arm or a cleaning tool can be in contact with the protruding openings from all angles, facilitating a user to clear the dirt accumulated near the protruding openings.

In some embodiments, a plurality of soft-rubber protruding points 2640 may be provided at the top portion of the boss 2600; and the soft-rubber protruding points 2640 are correspondingly matched with pits 7221 (as shown in FIG. 5) provided on the lower surface of the water tank projecting part (for example, the water tank projecting part 7140 shown in FIG. 3 or FIG. 4) of the water storage tank 7000. When the water storage tank 7000 is assembled in the water storage chamber 2700, the soft-rubber protruding point 2640 on the water storage chamber 2700 is limited in the pit 7221 on the water storage tank 7000. The specific number of the soft-rubber protruding points 2640 may be set according to an actual condition. The soft-rubber protruding points 2640 may be symmetrically distributed at the top portion of the boss 2600. For example, in an embodiment, there are four soft-rubber protruding points 2640 that are essentially distributed at the top portion of the boss 2600 in a uniform manner. Due to matched limiting between the soft-rubber protruding points 2640 and the pits 7221, it can be ensured that the position of the water storage tank 7000 in the water storage chamber 2700 is more accurate, preventing the position offset of the water storage tank 7000.

A vertically extending partition plate 2710 may be further included in the water storage chamber 2700, and divides the water storage chamber 2700 into two parts. One part is the waste water chamber 2300 for accommodating the waste water tank 5000; and the other part is the clean water chamber 2400 for accommodating the clean water tank 4000. At least one anti-vibration cushion 2711 is disposed at the top end of the partition plate 2710, and is configured to support the handle when the handle falls down, so as to reduce vibration of the handle. Each of the two sides of the partition plate 2710 includes at least one position limiting protrusion (not shown in the figure). A side wall of the waste water tank facing the partition plate 2710 and a side wall of the clean water tank facing the partition plate 2710 each include at least one position limiting recess (for example, the second recess 7120 shown in FIG. 3 or FIG. 4) matched with the position limiting protrusion. After the waste water tank and the clean water tank are assembled in the waste water chamber and the clean water chamber, the position limiting protrusion and the position limiting recess are matched with each other for position limiting.

The water storage tank 7000 is detachably assembled at the top end of the self-cleaning maintenance station body 2000. Specifically, the water storage tank 7000 is detachably assembled in the water storage chamber 2700. Due to the detachable assembling of the water storage tank 7000 and the upward and forward design of the water storage chamber 2700, the water storage tank 7000 can be mounted and demounted very conveniently, which helps a user perform daily replacement of liquid in the water storage tank 7000. The water storage tank 7000 may be made of a transparent material to facilitate the observation of the liquid level in the water storage tank 7000.

In some embodiments, when the water storage tank 7000 is assembled in the water storage chamber 2700, the top surface of the water storage tank 7000 is higher than the rear wall of the water storage chamber 2700; and most of a tank body of the water storage tank 7000 may be disposed outside the water storage chamber 2700. The foregoing design may further optimize mounting and demounting of the water storage tank 7000, which helps the user perform daily replacement of the liquid in the water storage tank 7000, and can reduce a usage amount of a material of the self-cleaning maintenance station body 2000. In addition, the top portion of the self-cleaning maintenance station body 2000 is designed with the lower front wall and the higher rear wall, and the front upper portion of the water storage chamber 2700 is also exposed outside the chamber, such that the user can observe a condition of a water level in the transparent water storage chamber 2700 conveniently, and carry out a corresponding operation on the water storage chamber 2700 in time.

The water storage tank 7000 may be a clean water tank 4000 or a waste water tank 5000. There may be a plurality of water storage tanks 7000. In some embodiments, the self-cleaning maintenance station body 2000 includes two water storage tanks 7000, namely, a clean water tank 4000 and a waste water tank 5000. The waste water tank 5000 and the clean water tank 4000 may be disposed in the water storage chamber 2700 side by side; and the top surfaces of the waste water tank 5000 and the clean water tank 4000 are flush to each other approximately, and the front surfaces of the waste water tank 5000 and the clean water tank 4000 are flush to each other approximately, too. After the waste water tank 5000 and the clean water tank 4000 are assembled onto the self-cleaning maintenance station body 2000, a neatly arranged structure is formed, which not only facilitates mounting, demounting and usage, but also provides the aesthetic neat appearance and enhances the user experience.

The water storage tank 7000 includes an opening allowing liquid to flow in or out. The opening is provided at an upper portion of the tank body. The height of the opening is higher than the highest water level line 7111 of the water storage tank 7000. When the water storage tank 7000 is the clean water tank 4000, the opening is a clean water opening. When the water storage tank 7000 is the waste water tank 5000, the opening is a waste water opening. Because the height of the opening is higher than the highest water level line of the water storage tank 7000, the liquid in the water storage tank 7000 can be prevented from overflowing from the water tank, particularly, the liquid is prevented from overflowing in a replacement process of the water tank. This further avoids damage to an electronic component caused by the overflowed liquid.

Referring to FIG. 3 to FIG. 5 together, the water storage tank 7000 includes a water tank accommodating portion 7100 and a water tank top cover 7200. The water tank top cover 7200 substantially covers the water tank accommodating portion 7100; the water tank accommodating portion 7100 includes a water tank body part 7130 and a water tank projecting part 7140. The water tank top cover 7200 and the water tank accommodating portion 7100 jointly form a chamber body; and the water tank projecting part 7140 protrudes from the water tank body part 7130, such that the water storage tank has a substantially L-shaped structure.

The water tank accommodating portion 7100 is configured to accommodate liquid. The side wall of the water tank accommodating portion 7100 includes at least one recess extending upward from the bottom portion of the water tank accommodating portion. The recess may be matched with a protrusion in the water storage chamber 2700 for position limiting. Specifically, in some embodiments, the side wall of the water tank accommodating portion 7100 includes a first recess 7110 extending upward from the bottom portion of the water tank accommodating portion to a position higher than the highest water level line 7111, and a second recess 7120 extending upward from the bottom portion of the water tank accommodating portion to a preset height; and the height of the second recess 7120 is not limited. In some embodiments, the first recess 7110 is matched with at least a part of the boss 2600 for position limiting. The top surface of the first recess 7110 forms at least a part of the bottom surface of the water tank projecting part 7140. The top surface of the first recess 7110 may include a clean water opening, a waste water opening, a pit 7221, or the like that is matched with and connected to the air pump opening 2610, the waste water tank connection opening 2620, the clean water tank connection opening 2630, or the soft-rubber protruding point 2640 disposed on the boss 2600. The second recess 7120 is matched with a protrusion on an inner side wall of the water storage chamber 2700 for position limiting. The water storage tank 7000 can be limited entirely by the recess formed on the water tank accommodating portion 7100, such that the water storage tank 7000 is accurately disposed at a corresponding position in the water storage chamber 2700, preventing the position offset of the water storage tank 7000.

The top cover 7200 covers the water tank accommodating portion 7100, is detachably connected to the water tank accommodating portion 7100, and can be opened or closed relative to the water tank accommodating portion 7100. When the top cover 7200 is closed, the liquid in the water tank accommodating portion 7100 is isolated from the outside, such that an external foreign matter can be prevented from falling into the water storage tank 7000. Optionally, when the top cover 7200 is closed, the top cover 7200 is in closed contact with the water tank accommodating portion 7100, such that the top cover 7200 and the water tank accommodating portion 7100 jointly form a closed structure.

The lower surface of the water tank projecting part 7140 is provided with a clean water opening, a waste water opening, a pit 7221, or the like. When the water storage tank 7000 is the waste water tank 5000, the lower surface of the water tank projecting part 7140 is provided with the waste water opening. When the water storage tank 7000 is the clean water tank 4000, the lower surface of the water tank projecting part 7140 is provided with the clean water opening. When the water storage tank 7000 is assembled in the water storage chamber 2700, the water tank projecting part 7140 is just received by the boss 2600 in the water storage chamber 2700; and the waste water opening or clean water opening formed on the lower surface of the water tank projecting part 7140 is connected to the protruding opening at the top portion of the boss 2600.

In some embodiments, the water storage tank 7000 is the waste water tank 5000; the lower surface of the water tank projecting part 7140 is further provided with an air pump connection opening; and the air pump connection opening is connected to the air pump opening 2610 at the top portion of the boss 2600. After the air pump opening 2610 is connected to the air pump connection opening, waste water may be pumped into the waste water tank 5000. In some embodiments, the air pump pumps air from the waste water tank 5000 through the air pump opening 2610 and the air pump connection opening; and the waste water tank 5000 has a closed structure. Therefore, a negative pressure is formed inside the waste water tank in the pumping process, and waste water in a washing bin is pumped into the waste water tank 5000 through a waste water pipe and the waste water tank connection opening 2620.

The lower surface of the water tank projecting part 7140 may be further provided with a plurality of pits 7221. When the water storage tank 7000 is assembled in the water storage chamber 2700, the water tank projecting part 7140 is just received by the boss 2600 in the water storage chamber 2700; and the plurality of pits 7221 formed on the lower surface of the water tank projecting part 7140 are matched with the soft-rubber protruding points 2640 at the top portion of the boss 2600, so as to limit the position of the water storage tank 7000. Due to matched limiting between the soft-rubber protruding points 2640 and the pits 7221, it can be ensured that the position of the water storage tank 7000 in the water storage chamber 2700 is more accurate, preventing the position offset of the water storage tank 7000.

As shown in FIG. 5, in some embodiments, the water storage tank 7000 is the clean water tank 4000. In this case, the water storage tank 7000 may further include a water pipe support 7300 and a water pipe 7400. The water pipe support 7300 is disposed on a protruding structure 7900 in the clean water tank 4000. The protruding structure 7900 is correspondingly formed by the first recess 7110, and is higher than the highest water level line of the clean water tank 4000. The water pipe 7400 extends from the water pipe support 7300 to the bottom portion of the clean water tank 4000, and the liquid may flow out of the clean water tank 4000 through the water pipe 7400. The water pipe 7400 includes a water pipe inlet and a water pipe outlet. In some embodiments, the water pipe inlet is located at the bottom portion of the clean water tank 4000, and the water pipe outlet is located at the water pipe support 7300 and may be connected to the clean water opening of the clean water tank 4000.

In some embodiments, the water storage tank 7000 is the clean water tank 4000. In this case, the water storage tank 7000 may further include a floating ball base 7500 and a floating ball 7600. In some embodiments, the floating ball base 7500 is disposed at the bottom portion of the clean water tank 4000, and is configured for placement of the floating ball 7600. The floating ball 7600 is connected to the floating ball base 7500, can rotate round a fixed axis on the floating ball base 7500, and is configured to detect a water level in the tank.

In some embodiments, the water storage tank 7000 is a clean water tank 4000. In this case, the water storage tank 7000 may further include a filter screen 7700. The filter screen 7700 is disposed at the end of the water pipe inlet, and is configured to filter the liquid when the liquid enters the water pipe 7400.

The water storage tank 7000 may further include a handle 7800. The handle 7800 may be hinged to the top portion of the water storage tank 7000. Due to the handle 7800, the water storage tank 7000 can be mounted and demounted more conveniently, which helps a user perform daily replacement of the liquid in the water storage tank 7000.

An embodiment of the present disclosure provides a self-cleaning maintenance station. A water tank is at least partially exposed outside a self-cleaning maintenance station body, such that a user can mount and demount the water tank conveniently. In addition, a water opening of the water tank is provided at the upper portion of the water tank, such that it is hard for liquid in the water tank to overflow, avoiding damage to an electronic element caused by the overflowed liquid.

In the related art, a fan of a self-cleaning maintenance station is disposed in a fan compartment; the fan compartment is disposed at the bottom portion of a dust collection bin; a ventilation hole is formed at the bottom portion of the dust collection bin; and when working, the fan produces a suction force to suck air from the dust collection bin, and the air is then discharged to the outside of a self-cleaning maintenance station body 2000 through a wind duct in the fan compartment. Because a dust collection opening is relatively close to a washing bin, in a process that a robot climbs on a station and leaves the station, the robot may bring residual water in the washing bin into the dust collection opening. If there are too much water, when the fan operates, water may be sucked into the dust collection bin through the wind duct. When water accumulated in the dust collection bin is excessive, the fan may be damaged, and an electric shock risk may occur.

In view of this, an embodiment of the present disclosure provides a self-cleaning maintenance station. The bottom portion of a dust collection bin is provided with a drain hole, through which liquid entering the dust collection bin can be drained in time conveniently. The same structure has the same technical effects, and some of the technical effects are not repeated herein. Specifically, as shown in FIG. 1 and FIG. 2, a self-cleaning maintenance station includes a bottom plate 1000 of the self-cleaning maintenance station and a self-cleaning maintenance station body 2000. The bottom plate 1000 is detachably or non-detachably connected to the self-cleaning maintenance station body 2000, facilitating transportation. The self-cleaning maintenance station body 2000 includes a dust collection chamber 2100. A dust collection hood 2800 covers the dust collection chamber 2100 to form a dust collection bin 3000. The dust collection chamber 2100 is integrally disposed at the top end of the self-cleaning maintenance station body 2000. As shown in FIG. 6, the top end of the self-cleaning maintenance station body 2000 is recessed inward to form the dust collection chamber 2100 for accommodating various dust collection components. The dust collection chamber 2100 includes a drain hole 2101. The drain hole 2101 is formed at the bottom portion of the dust collection chamber. There may be one or more drain holes 2101 that are formed based on the internal space of the dust collection chamber 2100, and are usually formed at relatively low positions at the bottom portion of the dust collection chamber, facilitating drainage of the liquid. The self-cleaning maintenance station body 2000 further includes a wind duct 2500. One end of the wind duct 2500 is communicated with a dust collection opening 6100 of a body base 6000. The other end of the wind duct 2500 is communicated with the dust collection chamber 2100. A side wall of the dust collection chamber 2100 includes a wind inlet 2102. The wind inlet 2102 is communicated with the dust collection opening 6100 of the body base 6000 through the wind duct 2500. The wind duct is formed on a side wall of the self-cleaning maintenance station body 2000, extends downward, and is communicated with the dust collection opening 6100 on the body base 6000 by passing through the body base 6000. In some embodiments, when the self-cleaning maintenance station is in a dust collection state, an airflow inside the dust collection bin 3000 is communicated with the outside of the dust collection bin 3000 through the wind duct 2500, and the drain hole 2101 is not communicated with the outside of the dust collection bin 3000, so as to ensure that sufficient negative pressure is generated in the dust collection bin to suck garbage in a dust box into a dust collection bag through the dust collection opening and the wind duct. When the self-cleaning maintenance station is not in the dust collection state, an internal wind opening of the dust collection bin 3000 is closed, such that the airflow in the dust collection bin 3000 is not communicated with the outside of the dust collection bin 3000, and the drain hole 2101 is communicated with the outside of the dust collection bin 3000. In this case, if liquid such as water on mop cloth enters the dust collection bin 3000 through the wind duct in a dust collection process, then, after the drain hole 2101 is opened, the liquid flows out of the dust collection bin 3000, avoiding damage to a component in the dust collection bin, particularly damage to the fan.

In some embodiments, the dust collection bin 3000 further includes a drain valve 2103. The drain valve 2103 is disposed on the outer side of the bottom portion of the dust collection bin 3000 and near an outlet of the drain hole 2101, and is configured to: when the self-cleaning maintenance station is in the dust collection state, close the drain hole under the action of the negative pressure in the dust collection bin, such that the drain hole 2101 is not communicated with the outside of the dust collection bin 3000; and when the self-cleaning maintenance station is not in the dust collection state, the drain valve 2103 is opened under the action of gravity, such that the drain hole 2101 is communicated with the outside of the dust collection bin 3000.

In some embodiments, the drain valve 2103 includes a fixed end 21031 and an elastic movable end 21032. The fixed end 21031 is fixedly mounted on an outer side of the bottom portion of the dust collection bin 3000 via screwing, binding, clamping, or another manner. The elastic movable end 21032 may be disposed at the outlet of the drain hole 2101 in such a manner that it is switchable between an open state and a closed state. The elastic movable end 21032 is made of a soft-rubber plug material such as rubber or plastic. In a normal state, the drain hole 2101 is in an opened state. If there is water at the bottom portion of the dust collection bin 3000, the water may be automatically drained from the drain hole 2101. When the fan is operating, a negative pressure is generated in the dust collection bin 3000, and the elastic movable end 21032 is automatically sucked and closed on the outer side of the drain hole to achieve sealing. After the fan stops, the elastic movable end 21032 is automatically opened under the action of gravity, and water (if any) in the dust collection bin 3000 is drained from the drain hole 2101 again.

In some embodiments, the side wall of the dust collection bin 3000 includes a water blocking structure 2104; and the water blocking structure 2104 is disposed on an edge of the wind inlet 2102, and is configured to block liquid entering through the wind inlet. Specifically, the water blocking structure 2104 includes a first blocking wall 21041 extending transversally along the edge of the wind inlet 2102, and a second blocking wall 21042 extending downward; and the first blocking wall 21041 and the second blocking wall 21042 form an air inflow region. In some embodiments, the second blocking wall 21042 at least extends downward to a lower edge of the wind inlet 2102 to block the liquid entering through the wind inlet 2102.

In some embodiments, the self-cleaning maintenance station body 2000 further includes a fan compartment 2200, a fan channel 2210 and a fan 2220. The fan compartment 2200 is disposed at the lower portion of the dust collection bin 3000, and is configured to accommodate the fan 2220. The fan channel 2210 is configured to communicate the fan compartment 2200 with the dust collection bin 3000, such that a suction wind force is provided for the dust collection bin 3000 by the fan 2220. The fan 2220 is disposed in the fan compartment 2200, and is turned on or off under the control of a control system, so as to provide the suction wind force required for dust collection. In some embodiments, the fan channel 2210 extends upward for a preset distance from the bottom portion of the dust collection bin 3000, such that the fan channel 2210 protrudes from the bottom portion of the dust collection bin 3000 to avoid the phenomenon that the fan is damaged by the liquid entering the fan compartment 2200 as the liquid entering the dust collection bin 3000 is not drained in time.

The self-cleaning maintenance station body provided in this embodiment includes the dust collection bin; the dust collection bin includes a drain hole and a wind duct; the drain hole is formed at the bottom portion of the dust collection bin; one end of the wind duct is communicated with the bottom plate; and the other end of the wind duct is communicated with the dust collection bin. When the self-cleaning maintenance station is in a dust collection state, the wind duct is communicated with the outside of the dust collection bin, and the drain hole is not communicated with the outside of the dust collection bin, which ensures that the interior of the dust collection bin is in a negative-pressure state that is beneficial to the dust collection operation. When the self-cleaning maintenance station is not in the dust collection state, the drain hole is communicated with the outside of the dust collection bin, such that water entering the dust collection bin is drained in time to avoid damage to a component in the dust collection bin.

In a dust collection process of a fan in a self-cleaning maintenance station in the related art, the fan produces larger vibration due to its rotation. As a result, damage is brought to the wall of a fan compartment in contact with the fan, and moreover, larger noise is generated due to the vibration.

In view of this, an embodiment provides a self-cleaning maintenance station. A plurality of shock-absorbing devices are disposed in a fan compartment to reduce vibration caused by rotation of a fan. The same structure has the same technical effects, and some of the technical effects are not repeated herein. Specifically, as shown in FIG. 1, FIG. 6 and FIG. 7, a self-cleaning maintenance station includes a bottom plate 1000 of the self-cleaning maintenance station and a self-cleaning maintenance station body 2000. The bottom plate 1000 of the self-cleaning maintenance station is detachably or non-detachably connected to the self-cleaning maintenance station body 2000. The self-cleaning maintenance station body 2000 includes a fan compartment 2200, a fan 2220 and a shock-absorbing device 2230. The fan compartment 2200 is integrally disposed in the self-cleaning maintenance station body 2000. The fan compartment 2200 includes an air inlet 2240 and an exhaust vent 2250. The air inlet 2240 is configured to be communicated with a dust collection bin 3000 through a fan channel 2210. The fan rotates to suck air out of the dust collection bin 3000 to ensure that the negative pressure is generated in the dust collection bin 3000, and that the sucked air enters the fan through the air inlet 2240 and is exhausted through the exhaust vent 2250. The fan 2220 is disposed in the fan compartment 2200, and rotates clockwise or counterclockwise under the control of a control system. The shock-absorbing device 2230 is assembled on at least a part of the outer surface of the fan 2220, in order to reduce vibration of the fan 2220. The shock-absorbing device 2230 may be made of an elastic material such as rubber or plastic.

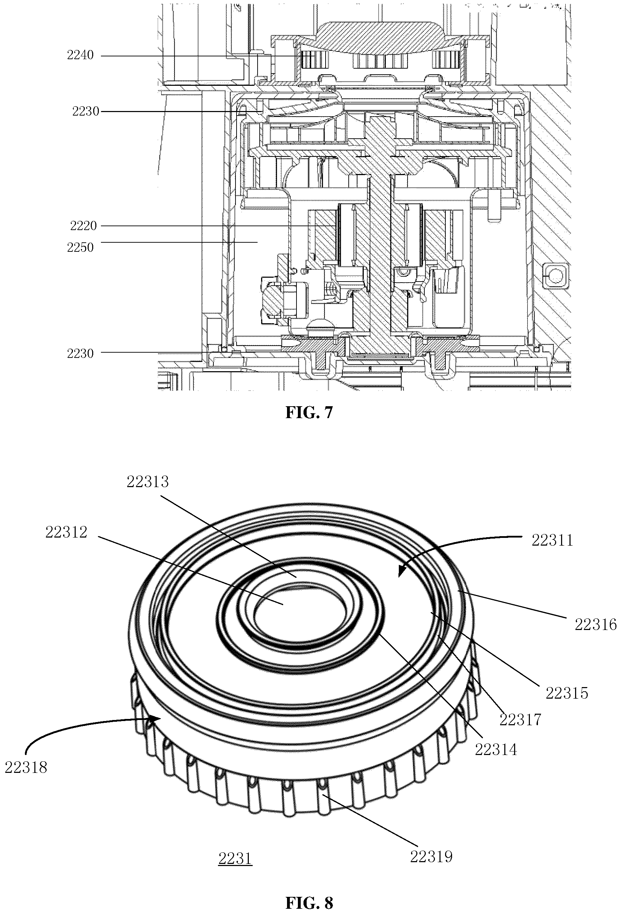

In some embodiments, specifically, as shown in FIG. 8, the shock-absorbing device 2230 includes a shock-absorbing hood 2231 assembled on at least a part of a top end of the fan 2220 to reduce vibration of the fan. The shape of the shock-absorbing hood 2231 is matched with the structure of the top end of the fan, such that the shock-absorbing hood 2231 can just cover the top end of the fan. Specifically, in some embodiments, the shock-absorbing hood 2231 includes a shock-absorbing hood top surface 22311. The shock-absorbing hood top surface 22311 includes a first opening 22312 matched with the air inlet 2240, and a sealing shock-absorbing part, extending outward from the first opening 22312, specifically, the sealing shock-absorbing part is a protruding edge 22313 and is configured to be assembled between the top end of the fan 2220 and the air inlet 2240 to reduce vibration of the fan. In some embodiments, an area of an opening of the protruding edge 22313 increases with the increase of an outward extending distance of the protruding edge 22313. Therefore, after the shock-absorbing hood 2231 is assembled on the top surface of the fan, and is assembled in the fan compartment, the horn-shaped protruding edge 22313, namely, the top surface sealing shock-absorbing part, can just support around the air inlet of the fan compartment. This not only seals the air inlet, but also reduces influence of vibration and noise. In some embodiments, the shock-absorbing hood top surface 22311 further includes at least one protrusion extending circumferentially and continuously around the first opening 22312, and the protrusion is configured to reduce vibration of the fan 2220 after being abutted onto the inner wall of the top surface of the fan compartment 2200. In some embodiments, the shock-absorbing hood top surface 22311 further includes a first protrusion 22314, a second protrusion 22315 and a third protrusion 22316 that extend circumferentially and continuously around the first opening 22312. A groove 22317 extending circumferentially and continuously around the first opening 22312 is formed between the second protrusion 22315 and the third protrusion 22316. The first protrusion 22314, the second protrusion 22315, the third protrusion 22316, and the groove 22317 may deform under the action of pressing in an assembling process, such that the hard connection between the fan and the fan compartment is reduced, thereby reducing damage caused by vibration. In some embodiments, a plurality of discontinuous cavities is included inside the third protrusion 22316 to further reduce vibration of the fan.

In some embodiments, as shown in FIG. 8, the shock-absorbing hood includes a shock-absorbing hood side wall 22318. The shock-absorbing hood side wall 22318 extends downward from the shock-absorbing hood top surface 22311. When the shock-absorbing hood 2231 covers the top surface of the fan, the shock-absorbing hood side wall 22318 covers a side surface of the fan. In some embodiments, the shock-absorbing hood side wall 22318 includes a plurality of first protruding beams 22319 disposed at intervals. The first protruding beam 22319 is of a hollow structure. The outer wall of each first protruding beam 22319 is abutted onto the side wall of the fan compartment 2200, so as to further reduce the vibration generated when the fan operates.

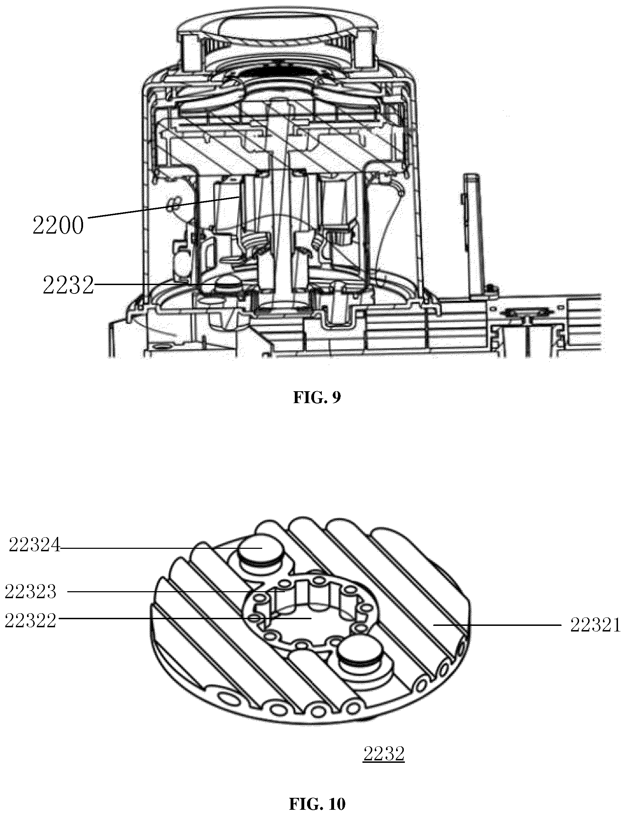

In some embodiments, as shown in FIG. 9, the shock-absorbing device 2230 further includes a shock-absorbing cushion 2232; and the shock-absorbing cushion 2232 is assembled on at least a part of the bottom end of the fan 2220 to reduce vibration of the fan 2220. In some embodiments, as shown in FIG. 10, the shock-absorbing cushion 2232 includes a second opening 22322 matched with the bottom end of the fan, and a plurality of second protruding beams 22321 extending transversally along the upper surface of the shock-absorbing cushion 2232. In some embodiments, the second protruding beam 22321 is of a hollow structure. A side wall of the second protruding beam 22321 is in contact with a bottom portion of the fan 2220 to further reduce vibration of the fan. After the shock-absorbing cushion 2232 is assembled at the bottom end of the fan 2220, an air exhaust structure at the bottom end of the fan extends into the second opening 22322. The bottom end of the fan is in interference clamping with an assembling protrusion 22324 of the shock-absorbing cushion 2232. The plane of the bottom end of the fan is in contact with the plurality of second protruding beams 22321 extending transversally along the upper surface of the shock-absorbing cushion 2232. The hollow second protruding beams 22321 play the role in reducing vibration. In some embodiments, the shock-absorbing cushion 2232 further includes a plurality of third protruding beams 22323 extending longitudinally along an inner side wall of the second opening 22322. The air exhaust structure at the bottom end of the fan extends into the second opening 22322, and then, is in tight contact with the plurality of third protruding beams 22323. The third protruding beam 22323 is of a hollow structure to further reduce the vibration of the fan.

According to the self-cleaning maintenance station provided in this embodiment, a self-cleaning maintenance station body includes a fan disposed in a fan compartment, and a shock-absorbing device assembled on at least a part of the outer surface of the fan; and a plurality of shock-absorbing structures are disposed on the shock-absorbing device, such that influence of vibration of the fan on the self-cleaning maintenance station can be reduced.

In the related art, because a cleaning module (for example, a mop support of a wet-type cleaning module) on the bottom surface of an automatic cleaning device usually has a lifting structure, the cleaning module in a natural state is not clung to the bottom of the automatic cleaning device under the action of gravity. Moreover, if a dust collection opening of the automatic cleaning device is in front of a washing bin, the cleaning module on the bottom surface of the automatic cleaning device has to pass through the dust collection opening during climbing on a station and leaving the station. When passing by the dust collection opening, the cleaning module (particularly, the mop support) is easily stuck by the dust collection opening. As a result, the automatic cleaning device cannot enter or leave the self-cleaning maintenance station successfully. Particularly, during the process that the automatic cleaning device climbs on the station, it is more possible that the automatic cleaning device cannot climbs on the station successfully because a driving force for backward climbing on the station is generally small. In addition, when the cleaning module is the wet-type cleaning module, mop cloth that has just been washed is not dried completely, and if the mop cloth rubs against the dust collection opening, water on the mop cloth is squeezed into the dust collection opening, and then sucked into a dust collection box, causing damage to a fan.

In view of this, an embodiment of the present disclosure provides a self-cleaning maintenance station. A lifting structure is disposed on a bottom plate body, such that the scratching or jamming occurring to a cleaning module in the process that the automatic cleaning device climbs on a station and leaves the station can be avoided, and a success rate of the automatic cleaning device climbing on and leaving the station can be improved. The same structure has the same technical effects, and some of the technical effects are not repeated herein.

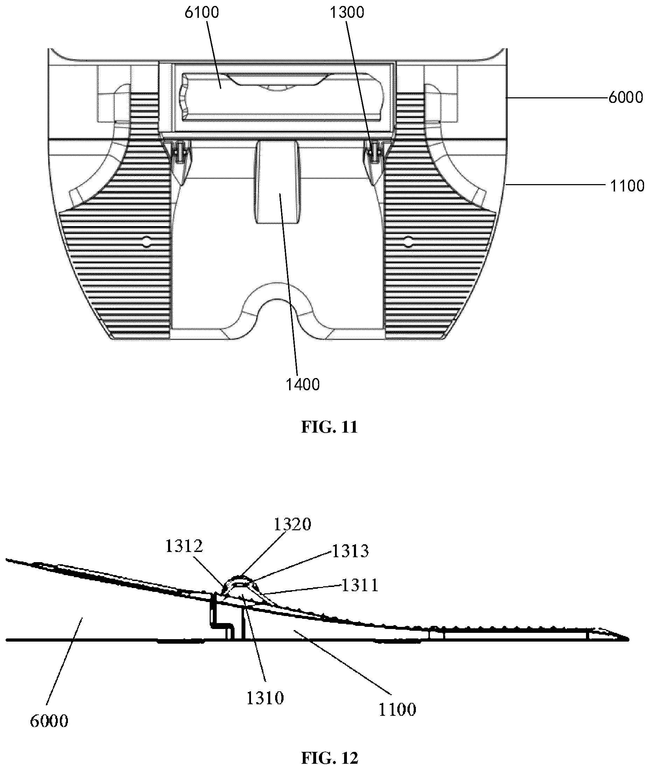

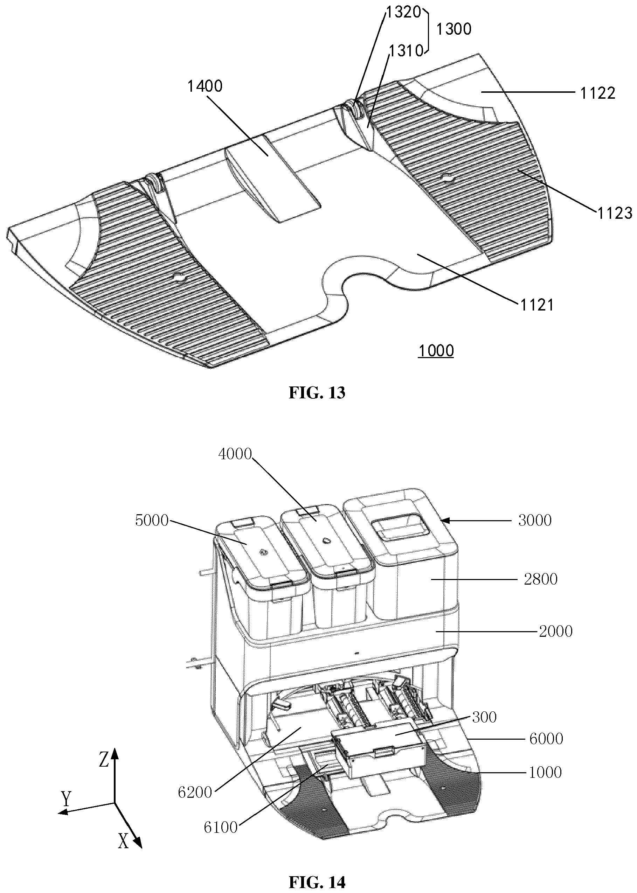

Specifically, the embodiment of the present disclosure provides a self-cleaning maintenance station, as an example, FIG. 11 and FIG. 12 exemplarily show a bottom plate of a self-cleaning maintenance station connected to a body base from different angles, and FIG. 13 exemplarily shows a schematic structural diagram of a bottom plate of a self-cleaning maintenance station.

As shown in FIG. 1, the self-cleaning maintenance station provided in this embodiment includes a bottom plate 1000 of the self-cleaning maintenance station, and a self-cleaning maintenance station body 2000.

The self-cleaning maintenance station body 2000 is configured to collect garbage in a dust box of the automatic cleaning device. In some embodiments, components such as a dust collection bin 3000, a clean water tank 4000 and a waste water tank 5000 may also be disposed on the self-cleaning maintenance station body 2000. A body base 6000 is integrally disposed under the self-cleaning maintenance station body 2000. In some embodiments, the bottom plate 1000 of the self-cleaning maintenance station is detachably or non-detachably connected to the body base 6000 to facilitate transportation.

In some embodiments, the body base 6000 under the self-cleaning maintenance station body 2000 includes a washing bin 6200; and the washing bin 6200 is configured to supplement a cleaning solution to a wet-type cleaning module of the automatic cleaning device, and/or accommodate debris removed from the wet-type cleaning module, and/or collect waste water generated in a process of cleaning the wet-type cleaning module, thereby facilitating subsequent treatment of the debris and the waste water. In some embodiments, the washing bin 6200 is disposed behind the dust collection opening 6100.

As shown in FIG. 11, the bottom plate 1000 of the self-cleaning maintenance station includes a bottom plate body 1100 and a lifting structure 1300.

The bottom plate body 1100 is configured to support the automatic cleaning device when the automatic cleaning device returns to the bottom plate 1000 of the self-cleaning maintenance station. In other words, the automatic cleaning device may move onto the bottom plate 1000 of the self-cleaning maintenance station, and is supported by the bottom plate body 1100. Specifically, in a process in which the automatic cleaning device moves onto the bottom plate 1000 of the self-cleaning maintenance station, driving wheels of the automatic cleaning device travel on an inclined surface of the bottom plate body 1100.

Referring to FIG. 11 and FIG. 13 together, the body base 6000 and the bottom plate body 1100 are sequentially arranged along a first direction X; and the bottom plate 1000 and the body base 6000 are connected to each other. Specifically, along the first direction X, the body base 6000 includes a starting end and a terminating end, the bottom plate body 1100 also includes a starting end and a terminating end, and the terminating end of the body base 6000 is abutted with the starting end of the bottom plate body 1100. In some embodiments, the body base 6000 and the bottom plate body 1100 are detachably or non-detachably connected to each other, facilitating transportation.

The body base 6000 and the bottom plate body 1100 at least form an inclined surface that is continuous along the first direction X to allow the driving wheels of the automatic cleaning device to travel on the inclined plane smoothly. In some embodiments, the driving wheels of the automatic cleaning device are located on two sides of the bottom portion of the automatic cleaning device. Correspondingly, the body base 6000 and the bottom plate body 1100 form a continuous inclined surface matched with positions of the driving wheels to allow the driving wheels to travel on the inclined plane. In some embodiments, the bottom plate body 1100 further includes a recessed portion 1121 and a raised portion 1122. In some embodiments, the recessed portion 1121 is located in the center of the bottom plate body 1100, and the raised portions 1122 are located on two sides of the recessed portion. An included angle between an upper surface of the recessed portion 1121 and the horizontal plane is smaller than an included angle between the upper surface of the raised portion 1122 and the horizontal plane.

In some embodiments, the included angle between the upper surface of the recessed portion 1121 and the horizontal plane may be nearly zero. The starting end of the raised portion 1122 and the terminating end of the body base 6000 are abutted with each other and are of the same height, such that the raised portions 1122 and the body base 6000 form two continuous inclined surfaces that are matched with the driving wheels. Because the recessed portion 1121 is disposed at the central position of the bottom plate body 1100, the automatic cleaning device can be prevented from being blocked by or rubbed against the surface of the bottom plate body 1100 in a process of climbing on a station and leaving the station.

Further, the raised portion 1122 of the bottom plate body 1100 is provided with an anti-skid structure 1123 along the first direction X; and the anti-skid structure 1123 is at least disposed at the starting end and the terminating end of the bottom plate body 1100 along the first direction. The anti-skid structure 1123 may be a convex bar or groove of any shape, and for example, may be a strip-shaped protrusion extending along a second direction Y, where the second direction Y is perpendicular to the first direction X. The anti-skid structure 1123 disposed on the raised portion 1122 can further help the automatic cleaning device to climb on and leave the station successfully.

In some embodiments, the body base 6000 includes an upper surface, denoted as a first upper surface. When the body base 6000 is placed on the horizontal ground, there is a preset tilt angle between the upper surface of the body base 6000 and a horizontal plane, where a slope factor corresponding to the preset tilt angle is denoted as a first slope factor. Similarly, the bottom plate body 1100 includes an upper surface, denoted as a second upper surface. When the bottom plate body 1100 is placed on the horizontal ground, there is a preset tilt angle between the upper surface of the bottom plate body 1100 and a horizontal plane, where a slope factor corresponding to the preset tilt angle is denoted as a second slope factor. In some embodiments, the bottom plate body 1100 includes a recessed portion 1121 and a raised portion 1122; and the second slope factor is a slope factor of the upper surface of the raised portion 1122 relative to the horizontal plane. In some embodiments, the following relationship may exist between the first slope factor and the second slope factor: the first slope factor is greater than the second slope factor. Because the automatic cleaning device has relatively small power at the beginning of climbing on the station, setting the second slope factor to a smaller value is beneficial for the automatic cleaning device to climb on a station.

As shown in FIG. 13, the dust collection opening 6100 is configured to be docked with a dust outlet of the automatic cleaning device; and the garbage in the dust box of the automatic cleaning device enters a dust collection station of the self-cleaning maintenance station body 2000 through the dust collection opening 6100. In some embodiments, a sealing rubber gasket is also disposed around the dust collection opening 6100, and is used for sealing after the dust collection opening 6100 is docked with the dust outlet of the automatic cleaning device, thereby preventing leakage of the garbage. The dust collection opening 6100 is located on the upper surface of the body base 6000, and is approximately disposed at the edge of a joint between the body base 6000 and the bottom plate body 1100.

Referring to FIG. 11 and FIG. 12 together, the lifting structure 1300 is disposed on the upper surface of the bottom plate body 1100, and is approximately disposed at the edge of a joint between the bottom plate body 1100 and the body base 6000. In some embodiments, the lifting structure 1300 is disposed on the recessed portion 1121 of the bottom plate body 1100, and configured to: in a process in which the automatic cleaning device moves back onto the bottom plate 1000 of the self-cleaning maintenance station (at this moment, a front side of a device body faces an outer side of the self-cleaning maintenance station body 2000, namely, the first direction X), press the cleaning module on the bottom surface of the automatic cleaning device, such that the cleaning module moves toward the interior of the automatic cleaning device, for example, pressing the cleaning module on the bottom surface of the automatic cleaning device into the automatic cleaning device.

In a process in which the automatic cleaning device moves backward onto the bottom plate 1000 of the self-cleaning maintenance station along the first direction X to allow the dust outlet of the automatic cleaning device to be docked with the dust collection opening 6100 of the body base 6000, if there is no lifting structure 1300 disposed on the upper surface of the bottom plate body 1100, the cleaning module (for example, the mop support of the wet-type cleaning module) of the automatic cleaning device may be stuck by the dust collection opening 6100 when passing by the dust collection opening 6100, such that the automatic cleaning device 100 cannot climb on or leave the station successfully.

Because the lifting structure 1300 is disposed on the upper surface of the bottom plate body 1100, in a process in which the automatic cleaning device moves backward onto the bottom plate 1000 of the self-cleaning maintenance station along the first direction X to enable the cleaning module of the automatic cleaning device to be docked with the washing bin in the self-cleaning maintenance station body 2000, first, the lifting structure 1300 may be abutted with at least a part of a frame of the cleaning module to enable the cleaning module to be lifted up for a specific height (for example, 8 mm), and at this moment, the cleaning module is pressed by the lifting structure 1300, such that the cleaning module moves toward the interior of the automatic cleaning device (for example, is pressed by the lifting structure 1300 into the automatic cleaning device). Then, as the automatic cleaning device continuously moves backward along the first direction X, the frame of the cleaning module is passing above the dust collection opening 6100 and is gradually separated from the lifting structure 1300, and in this process, even if the cleaning module is completely separated from the lifting structure 1300, the cleaning module can still gently pass the dust collection opening 6100 in a clinging manner because the cleaning module has been partially or completely located above the dust collection opening 6100. After completely passing the dust collection opening 6100, the cleaning module, under the action of gravity, gradually returns to a state before being pressed by the lifting structure 1300, that is, at least a part of the cleaning module protrudes from the automatic cleaning device in a direction away from the automatic cleaning device. In this way, the cleaning module falls back under the action of gravity for a specific height (for example, 8 mm), such that docking between the cleaning module and the washing bin is completed.

Because the lifting structure 1300 is disposed on the upper surface of the bottom plate body 1100, the dust collection opening 6100 can be avoided from blocking the cleaning module in the process that the automatic cleaning device climbs on or leaves a station, thereby improving the success rate of the automatic cleaning device in entering and leaving the station.

In some embodiments, the lifting structure 1300 includes a wedge-shaped component 1310 and a roller 1320.

The wedge-shaped component 1310 is disposed on the upper surface of the bottom plate body 1100, and protrudes from the upper surface of the bottom plate body 1100 in a direction away from the upper surface. The wedge-shaped component 1310 includes a first inclined surface 1311, a first top surface 1313 and a second inclined surface 1312 sequentially along the first direction X. The first inclined surface 1311, the first top surface 1313 and the second inclined surface 1312 are abutted sequentially in the first direction X.

An acute included angle between the first inclined surface 1311 and the upper surface of the bottom plate body 1100 where the first inclined surface is located is a first included angle α. An acute included angle between the second inclined surface 1312 and the upper surface of the bottom plate body 1100 where the second inclined surface is located is a second included angle β. In some embodiments, the first included angle α is smaller than the second included angle β, such that when the automatic cleaning device moves backward onto the bottom plate body 1100 along the first direction X, the automatic cleaning device can be pressed gently and fall back quickly. Specifically, in some embodiments, the first included angle α may range from 5° to 25°, for example, may be 5° or 25°, may range from 10° to 15°, or may be 10° or 15°, such that when the automatic cleaning device moves backward onto the bottom plate body 1100 along the first direction X, the cleaning module on the bottom surface of the automatic cleaning device is gently pressed by the lifting structure 1300. In some embodiments, the second included angle β may range from 75° to 90°, for example, may be 75° or 90°, may range from 80° to 85°, or may be 80° or 85°, such that the cleaning module falls back quickly under the action of gravity after the frame of the cleaning module is separated from the lifting structure 1300.

It can be understood that if the wedge-shaped component 1310 is disposed on the recessed portion 1121 of the bottom plate body 1100, the first included angle α is an included angle between the first inclined surface 1311 and the upper surface of the recessed portion 1121, and the second included angle β is an included angle between the second inclined surface 1312 and the upper surface of the recessed portion 1121. If the wedge-shaped component 1310 is disposed on the raised portion 1122 of the bottom plate body 1100, the first included angle α is an included angle between the first inclined surface 1311 and the upper surface of the raised portion 1122, and the second included angle β is an included angle between the second inclined surface 1312 and the upper surface of the raised portion 1122.

The roller 1320 is disposed on the first top surface 1313, and is configured to be in rolling contact with the cleaning module in a process that the cleaning module on the bottom surface of the automatic cleaning device is pressed and moves toward the interior of the automatic cleaning device. Due to the roller 1320, frictional resistance between the frame of the cleaning module and the wedge-shaped component 1310 can be reduced, thereby reducing abrasion between components, and prolonging service lives of the components.

In some embodiments, a part of the roller 1320 is embedded into the wedge-shaped component 1310, such that sliding contact between the lifting structure 1300 and the frame of the cleaning module can be smoothly transitioned to the rolling contact. In some embodiments, the roller 1320 is detachably connected to the wedge-shaped component 1310, such that the roller 1320 can be replaced conveniently.

In some embodiments, there are at least two lifting structures 1300. The at least two lifting structures 1300 are arranged oppositely in the second direction Y, where the second direction Y is perpendicular to the first direction X. In a process that the automatic cleaning device moves backward onto the bottom plate body 1100 along the first direction X, the at least two lifting structures 1300 are separately abutted with the frame of the cleaning module, such that the cleaning module is evenly lifted up for a specific height. Force acting on the cleaning module can be better dispersed by setting two or more lifting structures 1300, avoiding deflection of the cleaning module in the second direction Y caused by uneven force.

In some embodiments, there are two lifting structures 1300. The two lifting structures 1300 are arranged oppositely in a second direction Y; and the two lifting structures 1300 are approximately disposed symmetrically relative to a central axis of the bottom plate body 1100. A distance between the two lifting structures 1300 is equivalent to or slightly greater than the width of the dust collection opening 6100 in the second direction Y, such that a main brush cover under the automatic cleaning device can be prevented from being shielded.

In some embodiments, the bottom plate 1000 of the self-cleaning maintenance station further includes a beveled body 1400. The beveled body 1400 may be a slope, and is disposed on the surface of the bottom plate body 1100. Specifically, the beveled body 1400 may be disposed at the edge of a joint between the bottom plate body 1100 and the body base 6000, and is approximately located in front of the dust collection opening 6100 and on the central axis of the bottom plate body 1100. In some embodiments, there are two lifting structures 1300 that are arranged oppositely in the second direction Y; and the beveled body 1400 is approximately disposed in the middle of the two lifting structures 1300. Because the beveled body 1400 is disposed on the surface of the bottom plate body 1100, when the automatic cleaning device climbs on a station in a forward direction, a front end of the automatic cleaning device (particularly, a collision sensor disposed at the front end) can be avoided from being in contact with the edge of the dust collection opening 6100.

In some embodiments, the beveled body 1400 is disposed on the recessed portion 1121 of the bottom plate body 1100. In some embodiments, as shown in FIG. 13, both the beveled body 1400 and the lifting structure 1300 are disposed on the recessed portion 1121 of the bottom plate body 1100. Because the recessed portion 1121 is disposed at the central position of the bottom plate body 1100, and both the beveled body 1400 and the lifting structure 1300 are disposed on the recessed portion 1121, the automatic cleaning device can be prevented from being blocked by or rubbed against the surface of the bottom plate body 1100 in a process of climbing on a station and leaving the station.

In some embodiments, the lifting structure 1300 is disposed on the recessed portion 1121 of the bottom plate body 1100, and the height of the lifting structure 1300 is higher than the raised portion 1122, such that the cleaning module on the bottom surface of the automatic cleaning device can be pressed effectively, to allow the cleaning module to move toward the interior of the automatic cleaning device for a relatively large distance.

In some embodiments, the beveled body 1400 is disposed on the recessed portion 1121 of the bottom plate body 1100, and the height of the beveled body 1400 is approximately flush with the raised portion 1122. If the height of the beveled body 1400 is too low, the beveled body cannot perform a function of preventing the automatic cleaning device from touching the edge of the dust collection opening 6100 when the automatic cleaning device climbs on the station. However, if the height of the beveled body 1400 is too high, the beveled body may block the automatic cleaning device when the automatic cleaning device climbs on and leaves a station.

In some embodiments, there is a preset distance between the lifting structure 1300 and the terminating end of the bottom plate body 1100, where the preset distance meets the following condition that in a process in which the automatic cleaning device moves onto the bottom plate 1000 of the self-cleaning maintenance station along a rearward direction, the lifting structure 1300 is not in contact with the cleaning module before the driving wheels of the automatic cleaning device enter the terminating end of the bottom plate body 1100. The reason for such an arrangement lies in that, before the driving wheels of the automatic cleaning device are in contact with the anti-skid structure 1123 at the starting end, the retreat force of the automatic cleaning device is relatively small, and if the lifting structure 1300 is in contact with the cleaning module (for example, the mop cloth support) at this time, the automatic cleaning device's way to the self-cleaning maintenance station may be blocked. As a result, the automatic cleaning device may fail to enter the station. Correspondingly, when the driving wheels of the automatic cleaning device enter the terminating end of the bottom plate body 1100, the lifting structure 1300 may prop up the cleaning module. In this case, the automatic cleaning device has already stepped on the anti-skid structure 1123, and can successfully climb on or leave the station with the assistance of the anti-skid structure 1123.

The present disclosure further provides a self-cleaning system, including an automatic cleaning device and the self-cleaning maintenance station as described in the foregoing embodiments.

According to the self-cleaning maintenance station and the self-cleaning system provided in the embodiments of the present disclosure, by arranging the lifting structure on the bottom plate body, the scratching or jamming occurring to the cleaning module in the process that the automatic cleaning device climbs on and leaves a station can be avoided. Therefore, a success rate of the automatic cleaning device in climbing on and leaving the station can be improved.

Generally, the structure of a wind duct of a self-cleaning maintenance station in the related art is relatively complex, and needs to occupy a relatively large physical space, resulting in a relatively bulky appearance of the self-cleaning maintenance station. In addition, the complex structure of the wind duct also weakens a dust collection effect to a certain extent. As a result, it is hard to suck all garbage from a dust box into a dust collection chamber of the self-cleaning maintenance station.

In view of this, an embodiment of the present disclosure provides a self-cleaning maintenance station. The structure of a wind duct in the self-cleaning maintenance station is optimized, and a path of the wind duct is reduced, such that the wind duct of the self-cleaning maintenance station is smoother, and has a more compact structure. Therefore, dust collection efficiency of an automatic cleaning device can be improved.

Specifically, the embodiment of the present disclosure provides a self-cleaning maintenance station, as an example, FIG. 14 exemplarily shows a schematic diagram of an overall structure of a self-cleaning maintenance station combined with a dust box, and FIG. 15 and FIG. 16 specifically show the structure of a wind duct of a self-cleaning maintenance station and an advancing direction of an airflow in the wind duct in a dust collection state.

As shown in FIG. 14, the self-cleaning maintenance station provided in this embodiment includes a bottom plate 1000 of the self-cleaning maintenance station and a self-cleaning maintenance station body 2000. In some embodiments, the bottom plate 1000 of the self-cleaning maintenance station is detachably or non-detachably connected to the self-cleaning maintenance station body 2000. Specifically, the bottom plate 1000 of the self-cleaning maintenance station is detachably or non-detachably connected to a body base 6000 at the lower portion of the self-cleaning maintenance station body 2000. The detachable connection manner can facilitate transportation and maintenance.

The self-cleaning maintenance station body 2000 is configured to collect garbage in the dust box of the automatic cleaning device. In some embodiments, components such as a dust collection bin 3000, a clean water tank 4000 and a waste water tank 5000 may also be disposed side by side on the self-cleaning maintenance station body 2000. Specifically, as shown in FIG. 2, the self-cleaning maintenance station body 2000 includes a water storage chamber 2700 and a dust collection chamber 2100. The water storage chamber 2700 is disposed at the top portion of the self-cleaning maintenance station body 2000 with an opening of the water storage chamber 2700 facing upward and forward. The water storage chamber may further include a clean water bin for accommodating the clean water tank 4000, and a waste water bin for accommodating the waste water tank 5000. The dust collection chamber 2100 is disposed at the top end of the self-cleaning maintenance station body 2000 with an opening of the dust collection chamber 2100 facing upward and forward, and is disposed side by side with the water storage chamber 2700. The dust collection chamber 2100 constitutes a dust collection bin 3000 for accommodating a dust collection hood 2800. Due to the upward and forward design of both the water storage chamber 2700 and the dust collection chamber 2100, convenience is brought for mounting and demounting of the waste water tank 5000, the clean water tank 4000 and the dust collection hood 2800.

The body base 6000 is disposed under the self-cleaning maintenance station body 2000. In some embodiments, the body base 6000 is integrally disposed under the self-cleaning maintenance station body 2000. The body base 6000 is further abutted with the bottom plate 1000 of the self-cleaning maintenance station. Specifically, the bottom plate 1000 of the self-cleaning maintenance station and the body base 6000 are disposed sequentially along a second direction, where the second direction is a direction opposite an arrow of the front and rear axis X.

As shown in FIG. 14, the dust collection opening 6100 is provided on the body base 6000, and is approximately located at the edge of a joint between the body base 6000 and the bottom plate 1000 of the self-cleaning maintenance station. The dust collection opening 6100 is configured to be docked with a dust outlet of the automatic cleaning device; and garbage in the dust box 300 of the automatic cleaning device enters the dust collection chamber 2100 of the self-cleaning maintenance station body 2000 through the dust collection opening 6100. In some embodiments, a sealing rubber gasket is also disposed around the dust collection opening 6100, and is used for sealing after the dust collection opening 6100 is docked with the dust outlet of the automatic cleaning device, thereby preventing leakage of the garbage. The dust collection opening 6100 substantially extends in a first direction, where the first direction is a direction opposite an arrow of the transversal axis Y; and the first direction is approximately perpendicular to the second direction. The first direction is also a length direction of the dust collection opening 6100. A distance by which the dust collection opening 6100 extends in the first direction may be denoted as a length L₁. In addition to extending in the first direction, the dust collection opening 6100 also extends in a second direction. The second direction is a width direction of the dust collection opening 6100; and a distance by which the dust collection opening 6100 extends in the second direction may be denoted as a width W₁. It can be understood that a relationship between the length L₁ and the width W₁ is as follows: L₁ > W₁.

In some embodiments, the body base 6000 further includes a washing bin 6200. The washing bin 6200 is configured to clean a cleaning component on the automatic cleaning device, for example, supplement a cleaning solution to a wet-type cleaning module of the automatic cleaning device, and/or accommodate debris removed from the wet-type cleaning module, and/or collect waste water generated in a process of cleaning the wet-type cleaning module, thereby facilitating subsequent treatment of the debris and the waste water. In some embodiments, the washing bin 6200 is disposed behind the dust collection opening 6100. The washing bin 6200 extends in the second direction to the lower part of the self-cleaning maintenance station body 2000. A side wall may be formed between the self-cleaning maintenance station body 2000 and the washing bin 6200.

Referring to FIG. 15 and FIG. 16 together, the self-cleaning maintenance station body 2000 further includes a wind duct 2500. One end of the wind duct 2500 is communicated with a dust collection opening 6100 of a body base 6000. The other end of the wind duct 2500 is communicated with the dust collection chamber 2100. When the self-cleaning maintenance station is in a dust collection state, a sufficient negative pressure is generated in the dust collection bin 3000 to suck garbage in the dust box 300 into a dust collection bag through the dust collection opening 6100 and the wind duct 2500. The wind duct 2500 may be further divided into a body wind duct 2510 and a base wind duct 2520 based on its position. The base wind duct 2520 is substantially located at the position shown in the dashed-line box at the lower right corner of FIG. 15. The body wind duct 2510 is substantially located at the position shown in the dashed-line box at the upper right corner of FIG. 15. Solid arrows in FIG. 15 and FIG. 16 show moving trajectory of garbage in the base wind duct 2520 and the body wind duct 2510 under the action of airflows. Details are as follows.

The base wind duct 2520 is located in the body base 6000, and is approximately of an L-shaped structure. One end of the base wind duct 2520 is communicated with the dust collection opening 6100 in the length direction; and the other end of the base wind duct 2520 is communicated with the body wind duct 2510 on the side wall of the self-cleaning maintenance station body 2000. Specifically, the base wind duct 2520 is communicated with the length direction of the dust collection opening 6100, extends along the first direction to a position approximately being an edge of the body base 6000, and then extends along the second direction to the body wind duct 2510. In some embodiments, one end of the base wind duct 2520 located in the length direction of the dust collection opening 6100 is communicated with the dust collection opening 6100, such that an airflow and garbage driven thereby directly flow out of one end of the dust collection opening 6100 located in the length direction and then go forward along a nearly straight line, reducing resistance to the airflow flowing out of the dust collection opening 6100. In some embodiments, the position at which the base wind duct 2520 extends in the second direction is between an edge of the washing bin 6200 and an edge of the body base 6000, such that a finite space in the body base 6000 can be used sufficiently, reducing overall dimensions of a product. In some embodiments, the width of the base wind duct 2520 is slightly smaller than the width of the dust collection opening 6100. The width of the wind duct may be the maximum value of a cross section of the wind duct. For example, when the cross section of the wind duct is circular or nearly circular, the width of the wind duct is the diameter of a circle or the length of a long axis of an ellipse. The width of the base wind duct 2520 is reduced appropriately, such that a flow velocity of an airflow in the base wind duct 2520 can be increased. Therefore, garbage in the dust box 300 can pass through the base wind duct 2520 more easily, thereby avoiding blockage of the base wind duct 2520 and improving a dust collection effect. In some embodiments, the base wind duct 2520 has a smooth arc-shaped connection at the turn where the base wind duct 2520 extends in the first direction and the second direction. Although the first direction and the second direction are nearly perpendicular to each other, the base wind duct 2520 does not turn at a right angle at the turn between the first direction and the second direction, but using an arc that is tangent to both sides of the right angle to replace an original right angle, such that an airflow can flow through the base wind duct 2520 more gently, without any abrupt change in the flow velocity. Similarly, smooth arc-shaped connections may also be used at the turns where the base wind duct 2520 extends in the second direction and the body wind duct 2510 extends upward.

The body wind duct 2510 is at least disposed on the side wall of the self-cleaning maintenance station body 2000. One end of the body wind duct 2510 is communicated with the base wind duct 2520. The other end of the body wind duct 2510 leads to the dust collection chamber 2100. The body wind duct 2510 communicates the base wind duct 2520 with the dust collection chamber 2100. Specifically, the body wind duct 2510 extends upward along the side wall of the self-cleaning maintenance station body 2000 to the dust collection bin 3000. The side wall along which the body wind duct 2510 extends may be jointly formed by a side edge of the washing bin 6200 and a side edge of the self-cleaning maintenance station body 2000. Due to the foregoing design of the body wind duct 2510, a spare space between the self-cleaning maintenance station body 2000 and the washing bin 6200 can be used sufficiently, enabling the structure to be more compact. In some embodiments, the width of the body wind duct 2510 is greater than the width of the base wind duct 2520. Through appropriately adjusting a relationship between widths of the body wind duct 2510 and the base wind duct 2520, a flow velocity of an airflow in the base wind duct 2520 can be increased. Therefore, garbage in the dust box 300 can pass through the base wind duct 2520 more easily, thereby avoiding blockage of the base wind duct 2520 and improving a dust collection effect.

In some embodiments, the body wind duct 2510 and the base wind duct 2520 are two independent structures and are communicated with each other at a joint therebetween. The discrete structures can facilitate maintenance of the duct, particularly maintenance performed when the duct is blocked. In some embodiments, the body wind duct 2510 and the base wind duct 2520 are of an integral structure. Due to the integral structure, leakage of an airflow in the wind duct can be avoided effectively.

The present disclosure further provides a self-cleaning system, including an automatic cleaning device and the self-cleaning maintenance station as described in the foregoing embodiments.

Referring to FIG. 14 and FIG. 16 together, the dust box 300 included in the automatic cleaning device is shown in the figures, and includes a dust inlet 310 and a wind intake 320. The wind intake 320 is provided on a side wall of the dust box 300 facing a first extending direction of the base wind duct 2520. The dust inlet 310 is provided on a side wall of the dust box 300 facing the self-cleaning maintenance station body 2000. The dust inlet 310 is docked with the dust outlet of the automatic cleaning device.

In the dust collection state, the wind intake 320 of the dust box 300 is opened; and a first fan in the self-cleaning maintenance station starts to operate to suck air out of the dust collection chamber 2100 and the wind duct 2500. Therefore, air pressures in the dust collection chamber 2100 and the wind duct 2500 become lower; a U-shaped channel is formed for an airflow among the wind intake 320 and the dust inlet 310 of the dust box 300, the dust outlet of the automatic cleaning device, and the dust collection opening 6100 and the wind duct 2500 of the self-cleaning maintenance station, and the airflow brings away garbage in the dust box 300; and the garbage in the dust box 300 is finally sucked into the dust collection chamber 2100 under the driving of the airflow. The U-shaped channel is an optimal inflow and outflow channel for the airflow. Due to the design of the U-shaped channel, the airflow flows more smoothly, such that garbage in the dust box can be taken out of the dust box more easily, and enter the dust collection bin through the wind duct.

According to the self-cleaning maintenance station and the self-cleaning system provided in the embodiment of the present disclosure, the structure of the wind duct in the self-cleaning maintenance station is optimized to reduce the path of the wind duct, such that the wind duct of the self-cleaning maintenance station is smoother and has a more compact structure. Therefore, dust collection efficiency of the automatic cleaning device can be improved.

Finally, it should be noted that various embodiments in the Description are described in a progressive manner, each embodiment focuses on the differences from the other embodiments, and the same or similar parts among the various embodiments may refer to one another.

The above embodiments are only used to illustrate the technical solutions of the present disclosure, and are not intended to limit the present disclosure. Although the present disclosure has been described in detail with reference to the foregoing embodiments, those ordinarily skilled in the art should understand that: they can still make modifications to the technical solutions described in the foregoing embodiments, or make equivalent substitutions to some of the technical features; and these modifications or substitutions do not deviate the essence of the corresponding technical solutions from the spirit and scope of the technical solutions of the embodiments of the present disclosure.

## Claims

1. A self-cleaning maintenance station, comprising:
a self-cleaning maintenance station body and a water storage tank, wherein the water storage tank is assembled at a top end of the self-cleaning maintenance station body;
the self-cleaning maintenance station body comprises a water storage chamber, wherein the water storage chamber is disposed at a top portion of the self-cleaning maintenance station body with an opening of the water storage chamber facing upward and forward, and is configured to accommodate the water storage tank; and
the water storage tank is detachably assembled at the top end of the self-cleaning maintenance station body, and comprises a waste water opening or a clean water opening; and a height of the waste water opening or the clean water opening is higher than a highest water level line of the water storage tank.

2. The self-cleaning maintenance station according to claim 1, wherein the water storage tank comprises a water tank accommodating portion and a water tank top cover; the water tank top cover substantially covers the water tank accommodating portion; the water tank accommodating portion comprises a water tank body part and a water tank projecting part; and the waste water opening or the clean water opening is provided on a lower surface of the water tank projecting part.

3. The self-cleaning maintenance station according to claim 2, wherein a boss attached to a rear wall of the water storage chamber and extending upward from a bottom portion of the water storage chamber to a position slightly lower than a height of the rear wall of the water storage chamber is comprised in the water storage chamber; a height of the boss is higher than a height of the highest water level line; and when the water storage tank is assembled in the water storage chamber, the boss receives the water tank projecting part.

4. The self-cleaning maintenance station according to claim 3, wherein more than one protruding opening is provided at a top portion of the boss; and the protruding opening is configured to be connected to the waste water opening or the clean water opening.

5. The self-cleaning maintenance station according to claim 3, wherein more than one protruding point is provided at a top portion of the boss; a plurality of pits are correspondingly provided on the lower surface of the water tank projecting part; and when the water storage tank is assembled in the water storage chamber, the protruding point is limited in the pit.

6. The self-cleaning maintenance station according to claim 3, wherein a side wall of the water tank accommodating portion comprises at least one recess extending upward from a bottom portion of the water tank accommodating portion; and the recess is matched with a protrusion in the water storage chamber for position limiting.

7. The self-cleaning maintenance station according to claim 6, wherein the side wall of the water tank accommodating portion comprises:
a first recess, extending upward from the bottom portion of the water tank accommodating portion to a position higher than the highest water level line, and
a second recess, extending upward from the bottom portion of the water tank accommodating portion to a preset height; wherein
the first recess is matched with at least a part of the boss for position limiting.

8. The self-cleaning maintenance station according to claim 4, wherein the water storage tank comprises a waste water tank and a clean water tank; the waste water tank is provided with the waste water opening; and the clean water tank is provided with the clean water opening.

9. The self-cleaning maintenance station according to claim 8, wherein the more than one protruding opening comprises an air pump opening; the waste water tank comprises an air pump connection opening; and after the air pump opening is connected to the air pump connection opening, waste water is pumped into the waste water tank.

10. The self-cleaning maintenance station according to claim 8, wherein when the waste water tank and the clean water tank are assembled in the water storage chamber, most of tank bodies of the waste water tank and the clean water tank are disposed outside the water storage chamber.

11. The self-cleaning maintenance station according to claim 8, wherein the waste water tank and the clean water tank are made of a transparent material to facilitate observation of liquid levels in the waste water tank and the clean water tank.

12. The self-cleaning maintenance station according to claim 8, wherein the waste water tank and the clean water tank further comprise handles, and the handles are hinged to top portions of the waste water tank and the clean water tank.

13. The self-cleaning maintenance station according to claim 8, wherein an interior of the clean water tank comprises:
a floating ball base, disposed at a bottom portion of the clean water tank; and
a floating ball, connected to the floating ball base and configured to detect a water level.

14. The self-cleaning maintenance station according to claim 8, wherein an interior of the clean water tank further comprises:
a water pipe support, disposed on a protruding structure in the clean water tank, wherein the protruding structure is higher than the highest water level line; and
a water pipe, extending from the water pipe support to a bottom portion of the clean water tank to enable liquid flow out of the clean water tank through the water pipe.

15. The self-cleaning maintenance station according to claim 14, wherein the interior of the clean water tank further comprises:
a filter screen, disposed at an end of an inlet of the water pipe, and configured to filter the liquid when the liquid enters the water pipe.

16. A self-cleaning system, comprising an automatic cleaning device and the self-cleaning maintenance station according to any one of claims 1 to 15.
